(19) **Europäisches Patentamt European Patent Office Office européen des brevets**

(11) **EP 3 158 213 B1**

(12) **FASCICULE DE BREVET EUROPEEN**

(45) Date de publication et mention de la délivrance du brevet:
**21.03.2018 Bulletin 2018/12**

(21) Numéro de dépôt: **15733827.8**

(22) Date de dépôt: **12.06.2015**

(51) Int Cl.:
***F16D 48/06*** *(2006.01)*

(86) Numéro de dépôt international:
**PCT/FR2015/051569**

(87) Numéro de publication internationale:
**WO 2015/193592 (23.12.2015 Gazette 2015/51)**

(54) **ESTIMATEUR DE COUPLE POUR DOUBLE EMBRAYAGE**

DREHMOMENTSCHÄTZER FÜR DOPPELKUPPLUNG

TORQUE ESTIMATOR FOR DOUBLE CLUTCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2014 FR 1455651**

(43) Date de publication de la demande:
**26.04.2017 Bulletin 2017/17**

(73) Titulaire: **Valeo Embrayages
80009 Amiens Cedex 2 (FR)**

(72) Inventeurs:
 • **MAUREL, Pascal**
   **F-75009 Paris (FR)**
 • **LOSERO, Remi**
   **F-80009 AMIENS (FR)**
 • **GUERRA, Thierry Marie**
   **F-59227 Saulzoir (FR)**
 • **LAUBER, Jimmy**
   **F-59227 Saulzoir (FR)**

(74) Mandataire: **Cardon, Nicolas et al
Valeo Embrayages
Sce Propriété Intellectuelle
Le Delta
14, avenue des Béguines
95892 Cergy Pontoise Cedex (FR)**

(56) Documents cités:
**WO-A1-03/033290        WO-A1-2014/037649
WO-A2-2005/080830    FR-A1- 2 920 848
US-A1- 2008 091 324**

**Description**

**Domaine technique**

L'invention se rapporte au domaine des mesures de couple dans une chaîne de transmission de véhicule automobile à double embrayage. Voir, WO2014/037649 comme état de la technique plus proche.

**Arrière-plan technologique**

Il est utile de posséder des mesures de couple précises dans une chaîne de transmission de véhicule automobile pour diverses fonctions, notamment pour effectuer un pilotage précis d'un ou plusieurs dispositifs d'accouplement agencés dans la chaine de transmission.

Un véhicule automobile comprend généralement un dispositif d'accouplement entre un arbre moteur du véhicule automobile, qui est entraîné en rotation par un moteur à combustion interne et/ou un moteur électrique, et un arbre d'entrée de la boîte de vitesses. La boîte de vitesses peut être du type mécanique à plusieurs rapports de transmission avec ou sans robotisation des changements de rapports.

Le dispositif d'accouplement est en général un embrayage à friction, commandé par un actionneur piloté par un système de traitement de l'information en fonction d'un certain nombre de paramètres mesurés ou estimés tels que des positions, des vitesses, des accélérations, des efforts, des couples, des pressions et des tensions électriques. L'actionneur de commande de l'embrayage agit sur la position d'un organe mobile de cet embrayage, tel par exemple que la butée d'embrayage, qui détermine la position d'un plateau de pression et la charge appliquée à ce plateau par un diaphragme annulaire pour le serrage des garnitures de friction d'un disque relié à un arbre d'entrée de la boîte de vitesses, ce serrage déterminant le couple transmis par l'embrayage.

L'actionneur peut aussi agir directement sur la charge appliquée sur le plateau de pression par une liaison mécanique ou hydraulique par exemple. La commande automatisée de l'embrayage doit prendre en compte un grand nombre de grandeurs physiques, de grandeurs d'état et de grandeurs de commande qui sont mesurées ou estimées sur le moteur, sur la boîte de vitesses et sur le reste du véhicule, et de signaux représentant la volonté du conducteur, l'adaptation du comportement de la transmission au style de conduite du conducteur, l'état dynamique du véhicule et l'état du module de commande (initialisation, mode normal, mode dégradé, apprentissage, arrêt, ....) etc.

WO-A-2010007321 décrit un module de commande en couple des deux embrayages d'une chaîne de transmission. Ce module de commande comporte un estimateur du couple transmis par le double embrayage. Un inconvénient de cet estimateur réside dans le fait que l'estimation du couple dans l'embrayage repose sur la précision de l'information de couple moteur fournie par le calculateur moteur. Cette information n'est généralement précise que dans les phases de régime moteur stabilisé, alors qu'elle peut être entachée d'une très forte erreur lors des phases de forte dynamique comme le décollage ou le changement de rapport de transmission. En outre, cet estimateur ne présente pas une condition d'observabilité suffisante pour reconstruire le couple dans chacun des deux embrayages quand les deux embrayages transmettent un couple en même temps, notamment dans la phase de transfert de couple d'un embrayage sur l'autre pendant le changement de rapport.

**Résumé**

Une idée à la base de l'invention est de fournir des méthodes et dispositifs de mesure qui permettent de déterminer le couple transmis par un ou plusieurs embrayages sans dépendre de la précision d'une information de couple moteur. Certains aspects de l'invention visent en outre à fournir une méthode d'estimation qui permet d'estimer le couple dans chaque embrayage d'une transmission à double embrayage dans toutes les phases de fonctionnement, notamment pendant les phases de transfert de couple d'un embrayage sur l'autre pendant le changement de rapport. Certains aspects de l'invention partent de l'idée de déterminer le couple transmis par un ou plusieurs embrayages essentiellement à partir de la mesure de déplacement angulaire des arbres, notamment au moyen d'un ou plusieurs capteurs de déplacement angulaire à haute résolution.

Selon un mode de réalisation, l'invention fournit un procédé pour déterminer le couple transmis par chaque embrayage dans une chaîne de transmission de véhicule automobile à double embrayage, dans lequel on emploie une chaîne de transmission comportant :

- un arbre moteur destiné à être entraîné en rotation par un moteur du véhicule automobile,

- un double volant amortisseur comportant un élément primaire et un élément secondaire, l'élément primaire étant solidaire en rotation de l'arbre moteur et l'élément secondaire étant accouplé à l'élément primaire via un élément d'amortissement,

- une boîte de vitesses comportant une première demi-boîte et une seconde demi-boîte indépendantes l'une de l'autre, chaque demi-boîte comportant un arbre d'entrée destiné à être accouplé par friction à l'élément secondaire du double volant amortisseur par un premier, respectivement second, embrayage, un arbre secondaire et une pluralité d'engrenages synchroniseurs aptes à accoupler l'arbre d'entrée et l'arbre secondaire selon une pluralité de rapports de transmission, l'arbre secondaire de chaque demi-boîte étant accouplé à un arbre de sortie de la boîte de vitesses et des arbres des roues motrices du véhicule automobile étant accouplés à l'arbre de sortie de la boîte de vitesses via un différentiel,

le procédé comportant :

- mesurer une vitesse de rotation de l'arbre moteur,

- mesurer une vitesse de rotation de l'élément secondaire du double volant amortisseur,

- fournir un premier modèle numérique mis en oeuvre par ordinateur qui simule le double volant amortisseur par un premier système déformable en torsion, le premier modèle numérique comportant un coefficient de raideur de torsion du premier système déformable, un coefficient d'amortissement visqueux en torsion du premier système déformable et une pluralité de premières variables représentant un état instantané dudit premier système déformable en torsion, dans lequel les premières variables sont choisies dans l'ensemble constitué de la vitesse de rotation de l'arbre moteur, la vitesse de rotation de l'élément secondaire du double volant amortisseur, un couple transmis par l'arbre moteur, un couple cumulé transmis par l'élément secondaire du double volant amortisseur aux deux demies boîtes de vitesse, leurs dérivées et intégrales temporelles à tous les ordres, et des combinaisons de ces variables, les premières variables comportant une première variable de convergence choisie dans l'ensemble constitué de la vitesse de rotation de l'arbre moteur, la vitesse de rotation de l'élément secondaire du double volant amortisseur, leurs dérivées et intégrales temporelles à tous les ordres, et les combinaisons de ces variables,

- calculer les premières variables du premier modèle numérique à des instants successifs en faisant converger la première variable de convergence avec la vitesse de rotation mesurée de l'arbre moteur et/ou la vitesse de rotation mesurée de l'élément secondaire du double volant amortisseur, et

- déterminer le couple cumulé transmis par le premier et le second embrayage depuis l'élément secondaire du double volant amortisseur à des instants successifs en fonction des premières variables calculées, ledit couple cumulé correspondant à la somme des couples appliqués par le premier et le second embrayage sur les arbres d'entrée respectivement de la première et de la seconde demi-boîte de vitesses,

le procédé comportant en outre

- mesurer une vitesse de rotation de l'arbre de sortie de la boîte de vitesse,

- mesurer une vitesse de rotation des arbres des roues,

- fournir un second modèle numérique mis en oeuvre par ordinateur qui simule par un second système déformable en torsion l'ensemble constitué de l'arbre de sortie de la boîte de vitesse, le différentiel et les arbres des roues motrices, le second modèle numérique comportant un coefficient de raideur de torsion du second système déformable, un coefficient d'amortissement visqueux en torsion du second système déformable et une pluralité de secondes variables représentant un état instantané dudit second système déformable en torsion, dans lequel les secondes variables sont choisies dans l'ensemble constitué de la vitesse de rotation de l'arbre de sortie de la boîte de vitesse, la vitesse de rotation des arbres des roues, un couple de sortie de la boîte de vitesse, leurs dérivées et intégrales temporelles à tous les ordres, et les combinaisons de ces variables, les secondes variables comportant une seconde variable de convergence choisie dans l'ensemble constitué de la vitesse de rotation de l'arbre de sortie de la boîte de vitesses, la vitesse de rotation des arbres des roues, leurs dérivées et intégrales temporelles à tous les ordres, et les combinaisons de ces variables,

- calculer les secondes variables du second modèle numérique à des instants successifs en faisant converger la seconde variable de convergence avec la vitesse de rotation mesurée de l'arbre de sortie de la boîte de vitesses et/ou la vitesse de rotation mesurée des arbres des roues, et

- déterminer le couple de sortie de la boîte de vitesses à des instants successifs en fonction des secondes variables calculées, ledit couple de sortie de la boîte de vitesses correspondant à la somme des couples d'entrée appliqués par le premier et le second embrayage sur les arbres d'entrée respectivement des premières et secondes demi-boîtes de vitesses pondérés par les rapports de transmission respectifs des demi-boîtes de vitesses,

et le procédé comportant en outre

déterminer le premier couple d'entrée agissant sur l'arbre d'entrée de la première demi-boîte de vitesses et le second couple d'entrée agissant sur l'arbre d'entrée de la seconde demi-boîte de vitesses à des instants successifs en fonction du couple cumulé déterminé avec le premier modèle numérique et du couple de sortie de la boîte de vitesses déterminé par le second modèle numérique.

Selon des modes de réalisation, un tel procédé de détermination de couple peut comporter une ou plusieurs des caractéristiques suivantes.

Selon un mode de réalisation, au moins un des premier et second modèles numériques comporte en outre un coefficient de frottement visqueux du premier système déformable correspondant.

Selon un mode de réalisation, les premières variables du premier modèle numérique comportent deux variables de convergence qui sont respectivement la vitesse de rotation de l'arbre moteur et la vitesse de rotation de l'élément secondaire du double volant amortisseur, l'étape de calcul des premières variables du second modèle numérique à des instants successifs étant réalisée en faisant converger les premières variables de convergence avec respectivement la vitesse de rotation mesurée de l'arbre moteur et la vitesse de rotation mesurée de l'élément secondaire du double volant amortisseur.

Selon un mode de réalisation, les secondes variables du second modèle numérique comportent deux variables de convergence qui sont respectivement la vitesse de rotation de l'arbre de sortie de la boite de vitesse et la vitesse de rotation des arbres des roues, l'étape de calcul des secondes variables du second modèle numérique à des instants successifs étant réalisée en faisant converger les secondes variables de convergence avec respectivement la vitesse de rotation mesurée de l'arbre de sortie de la boite de vitesse et la vitesse de rotation mesurée des arbres des roues.

Selon un mode de réalisation, l'étape de déterminer le premier et le second couple d'entrée agissant respectivement sur chaque arbre d'entrée des demies boites de vitesse est réalisée par un bloc de traitement multipliant par une matrice inverse un vecteur constitué de la somme des couples appliqués sur chaque arbre d'entrée de la boîte de vitesses et de la somme de ces couples pondérés chacun par les rapport des demies boîtes respectives.

Selon un mode de réalisation, le procédé comporte en outre

- mesurer la vitesse de rotation de l'arbre d'entrée de la première demi-boîte de vitesse,

- mesurer la vitesse de rotation de l'arbre d'entrée de la seconde demi-boîte de vitesse,

- fournir un troisième modèle numérique mis en oeuvre par ordinateur qui simule la boîte de vitesses par un troisième système déformable en torsion, le troisième modèle numérique comportant pour chaque demi-boîte un coefficient de raideur de torsion et un coefficient d'amortissement visqueux en torsion, le troisième modèle numérique comportant également une pluralité de troisièmes variables représentant un état instantané dudit troisième système déformable en torsion, dans lequel les troisièmes variables sont choisies dans l'ensemble constitué de :

  ° la vitesse de rotation de l'arbre d'entrée de la première demi-boîte de vitesse,

  ° la vitesse de rotation de l'arbre d'entrée de la seconde demi-boîte de vitesse,

  ° la vitesse de rotation de l'arbre de sortie de la boîte de vitesse,

  ° le couple d'entrée agissant sur la première demi-boîte de vitesse,

  ° le couple d'entrée agissant sur la seconde demi-boîte de vitesse,

  ° la somme des couples d'entrée agissant sur les demies boîtes de vitesse,

  ° le couple de sortie de la boîte de vitesse,

  ° un angle de déformation en torsion de la première demi-boîte de vitesses entre un point de mesure de la vitesse de rotation de l'arbre d'entrée de la première demi-boîte de vitesses et un point de mesure de la vitesse de rotation de l'arbre de sortie de la boîte de vitesse,

◦ un angle de déformation en torsion de la seconde demi-boîte de vitesses entre un point de mesure de la vitesse de rotation de l'arbre d'entrée de la seconde demi-boîte de vitesses et le point de mesure de la vitesse de rotation de l'arbre de sortie de la boîte de vitesse,

◦ les dérivées et intégrales temporelles à tous les ordres des variables précitées et les combinaisons de ces variables

les troisièmes variables comportant une troisième variable de convergence choisie dans l'ensemble constitué de

◦ la vitesse de rotation de l'arbre d'entrée de la première demi-boîte de vitesse,

◦ la vitesse de rotation de l'arbre d'entrée de la seconde demi-boîte de vitesse,

◦ la vitesse de rotation de l'arbre de sortie de la boîte de vitesse,

◦ la somme des couples d'entrée agissant sur les demies boîtes de vitesse,

◦ le couple de sortie de la boîte de vitesse,

◦ leurs dérivées et intégrales temporelles à tous les ordres et les combinaisons de ces variables,

- calculer les troisièmes variables du troisième modèle numérique à des instants successifs en faisant converger la troisième variable de convergence avec, respectivement, la vitesse de rotation mesurée de l'arbre d'entrée de la première demi-boîte de vitesse, la vitesse de rotation mesurée de l'arbre d'entrée de la seconde demi-boîte de vitesse, la vitesse de rotation mesurée de l'arbre de sortie de la boîte de vitesses, le couple cumulé déterminé par le premier modèle numérique et le couple de sortie de la boîte de vitesses déterminé par le second modèle numérique, et

- déterminer le premier couple d'entrée agissant sur l'arbre d'entrée de la première demi-boîte de vitesses et le second couple d'entrée agissant sur l'arbre d'entrée de la seconde demi-boîte de vitesses à des instants successifs en fonction des angles de déformation des arbres des demies boîtes de vitesse entre les points de mesure des vitesses de rotation des arbres d'entrée respectif et le point de mesure de la vitesse de rotation de l'arbre de sortie de la boîte de vitesses calculés.

Selon un mode de réalisation, les troisièmes variables du troisième modèle numérique comportent des troisièmes variables de convergence correspondant respectivement à la vitesse de rotation de l'arbre d'entrée de la première demi-boîte de vitesses, la vitesse de rotation de l'arbre d'entrée de la seconde demi-boîte de vitesses, la vitesse de rotation de l'arbre de sortie de la boîte de vitesses, la somme des couples d'entrée des demies boîtes de vitesse, le couple de sortie de la boîte de vitesses, leurs dérivées et intégrales temporelles à tous les ordres, les combinaisons de ces variables, l'étape de calcul des troisièmes variables du troisième modèle numérique à des instants successifs étant réalisée en faisant converger les troisièmes variables de convergence avec les vitesses mesurées correspondantes et avec les couples correspondants déterminés par les premier et second modèles numériques.

Selon un mode de réalisation, les vitesses de rotation sont mesurées à l'aide de capteurs physiques présentant une résolution angulaire inférieure ou égale à 1/400e de tour, de préférence inférieure ou égale à 1/600e de tour.

Selon un mode de réalisation, l'étape de mesurer la vitesse de rotation des arbres des roues du véhicule comporte

- mesurer la vitesse de rotation d'une première roue,

- mesurer la vitesse de rotation d'une seconde roue,

et dans lequel la vitesse de rotation des arbres des roues est la moyenne des vitesses des roues mesurées.

Selon un mode de réalisation, l'étape de mesurer la vitesse de rotation des arbres des roues comporte l'étape de mesurer la vitesse de rotation d'une unique roue.

Selon un mode de réalisation, le procédé comporte en outre les étapes de mesurer et d'enregistrer à des instants où la chaîne de transmission du véhicule est dans un état stable le coefficient de raideur de torsion et le coefficient d'amortissement visqueux en torsion des systèmes déformables.

Selon un mode de réalisation, l'invention fournit également un système de mesure pour déterminer le couple transmis par chaque embrayage dans une chaîne de transmission de véhicule automobile à double embrayage, convenant pour une chaîne de transmission comportant

- un arbre moteur destiné à être entraîné en rotation par un moteur du véhicule automobile,

- un double volant amortisseur comportant un élément primaire et un élément secondaire, l'élément primaire étant solidaire en rotation de l'arbre moteur et l'élément secondaire étant accouplé à l'élément primaire via un élément d'amortissement,

- une boîte de vitesses comportant une première demi-boîte et une seconde demi-boîte indépendantes l'une de l'autre, chaque demi-boîte comportant un arbre d'entrée destiné à être accouplé par friction à l'élément secondaire du double volant amortisseur par un premier, respectivement second, embrayage, un arbre secondaire et une pluralité d'engrenages synchroniseurs aptes à accoupler l'arbre d'entrée et l'arbre secondaire selon une pluralité de rapports de transmission, l'arbre secondaire de chaque demi-boîte étant accouplé à un arbre de sortie de la boîte de vitesses et des arbres des roues motrices du véhicule automobile étant accouplés à l'arbre de sortie de la boîte de vitesses via un différentiel,

- un premier capteur physique apte à mesurer une vitesse de rotation de l'arbre moteur,

- un second capteur physique apte à mesurer une vitesse de rotation de l'élément secondaire du double volant amortisseur,

- un troisième capteur physique apte à mesurer une vitesse de rotation d'un arbre de sortie de la boîte de vitesses,

- un quatrième capteur physique apte à mesurer une vitesse de rotation des roues,

- un dispositif de calcul mis en oeuvre par ordinateur fournissant un premier et un second modèles numériques,

dans lequel un premier modèle numérique simule le volant amortisseur par un premier système déformable en torsion, le premier modèle numérique comportant un coefficient de raideur de torsion du premier système déformable, un coefficient d'amortissement visqueux en torsion du premier système déformable et une pluralité de premières variables représentant un état instantané dudit premier système déformable en torsion, dans lequel les premières variables sont choisies dans l'ensemble constitué de la vitesse de rotation de l'arbre moteur, la vitesse de rotation de l'élément secondaire du double volant amortisseur, un couple transmis par l'arbre moteur, un couple cumulé transmis par l'élément secondaire du double volant amortisseur aux deux demies boîtes de vitesse, leurs dérivées et intégrales temporelles à tous les ordres, et des combinaisons de ces variables, les premières variables comportant une première variable de convergence choisie dans l'ensemble constitué de la vitesse de rotation de l'arbre moteur, la vitesse de rotation de l'élément secondaire du double volant amortisseur, leurs dérivées et intégrales temporelles à tous les ordres, et les combinaisons de ces variables, le dispositif de calcul étant apte à calculer les premières variables du premier modèle numérique à des instants successifs en faisant converger la première variable de convergence avec la vitesse de rotation mesurée de l'arbre moteur et/ou la vitesse de rotation mesurée de l'élément secondaire du double volant amortisseur et à déterminer le couple cumulé transmis par l'élément secondaire du double volant amortisseur à des instants successifs en fonction des premières variables calculées, ledit couple cumulé correspondant à la somme des couples appliqués par les embrayages sur les arbres d'entrée de la première et de la seconde demi-boîte de vitesses

et dans lequel un second modèle numérique simule par un second système déformable en torsion l'ensemble constitué de l'arbre de sortie de la boîte de vitesses, le différentiel et les arbres des roues motrices, le second modèle numérique comportant un coefficient de raideur de torsion du second système déformable, un coefficient d'amortissement visqueux en torsion du second système déformable et une pluralité de secondes variables représentant un état instantané dudit second système déformable en torsion, dans lequel les secondes variables sont choisies dans l'ensemble constitué de la vitesse de rotation de l'arbre de sortie de la boîte de vitesses, la vitesse de rotation des arbres des roues, un couple de sortie de la boîte de vitesses, leurs dérivées et intégrales temporelles à tous les ordres, et les combinaisons de ces variables, les secondes variables comportant une seconde variable de convergence choisie dans l'ensemble constitué de la vitesse de rotation de l'arbre de sortie de la boîte de vitesses, la vitesse de rotation des arbres des roues, leurs dérivées et intégrales temporelles à tous les ordres, et les combinaisons de ces variables, le dispositif de calcul étant apte à calculer les secondes variables du second modèle numérique à des instants successifs en faisant converger la seconde variable de sortie avec la vitesse de rotation mesurée de l'arbre de sortie de la boîte de vitesses et/ou la vitesse de rotation mesurée des arbres des roues et à déterminer le couple de sortie de la boîte de vitesses à des instants successifs en fonction des secondes variables calculées, ledit couple de sortie de la boîte de vitesses correspondant à la somme des couples appliqués par les arbres d'entrée des premières et secondes demies boîtes de vitesse pondérés par les rapports de transmission respectifs des demies boîtes de vitesse sur l'arbre de sortie de la boîte de vitesses, ces couples correspondant chacun au couple de l'embrayage liant l'arbre d'entrée de boîte de vitesses à l'élément secondaire du double volant amortisseur,

un dispositif de calcul étant apte à déterminer le premier couple d'entrée agissant sur l'arbre d'entrée de la première demi-boîte de vitesses et le second couple d'entrée agissant sur l'arbre d'entrée de la seconde demi-boîte de vitesses à des instants successifs en fonction du couple cumulé déterminé avec le premier modèle numérique et du couple de sortie de la boîte de vitesses déterminé par le second modèle numérique.

Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- La figure 1 est une représentation schématique d'une chaine de transmission à double embrayage dans un véhicule automobile vu de dessus ;

- La figure 2 est une représentation canonique d'un estimateur à entrée inconnue pouvant être mis en oeuvre par ordinateur pour déterminer les états d'un système ;

- La figure 3 est un schéma en blocs fonctionnels représentant la chaine de transmission de la figure 1 et un dispositif de mesure de couple qui lui est associé ;

- Les figures 4 et 5 sont des représentations fonctionnelles de modèles physique pouvant être employés respectivement dans un premier et un second estimateur de couple ;

- La figure 6 représente un premier mode de réalisation pour le bloc de traitement chargé de la reconstruction des couples d'embrayage $Tc_1$ et $Tc_2$ ;

- La figure 7 représente un modèle physique applicable à un second mode de réalisation du bloc de traitement chargé de la reconstruction des couples d'embrayage $Tc_1$ et $Tc_2$ ;

- La figure 8 représente un estimateur du bloc de traitement exploitant le modèle physique de la figure 7;

- La figure 9 est un schéma en blocs fonctionnels représentant un dispositif de commande d'embrayage dans lequel des estimateurs de couple peuvent être employés.

**Description détaillée de modes de réalisation**

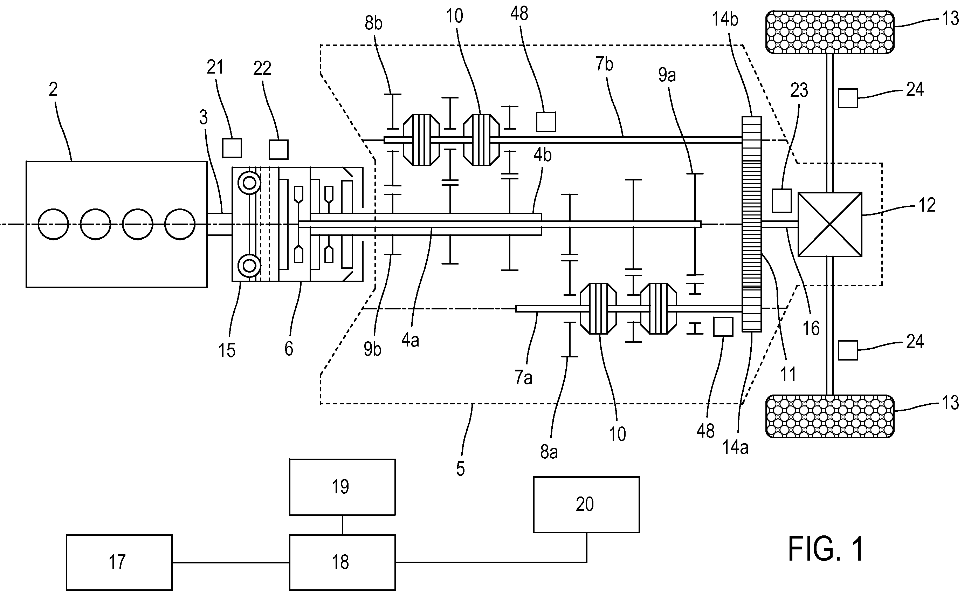

La figure 1 illustre l'architecture d'un système de transmission robotisé à double embrayage d'un véhicule automobile 1. Le véhicule 1 comporte un moteur thermique 2 dont l'arbre de sortie ou vilebrequin 3 est relié aux deux arbres primaires 4a et 4b d'une boîte de vitesses 5 via un double embrayage 6. Chaque arbre primaire 4a et 4b est lié à un disque de friction respectif du double embrayage 6. Le double embrayage 6 permet de lier par frottement l'un ou/et l'autre des deux arbres primaires 4a et 4b au volant moteur 15 afin de transmettre le couple moteur à la boîte de vitesses 5. Pour cela, le volant moteur 15 comporte un élément primaire et un élément secondaire formant un double volant amortisseur. L'élément primaire est directement lié à et entraîné en rotation par le vilebrequin 3. L'élément secondaire du volant moteur 15 est lié en rotation à l'élément primaire du volant moteur 15 par un système d'amortissement. Les arbres primaires 4a et 4b sont liés à l'élément secondaire du volant moteur 15 par le double embrayage à friction 6.

La boîte de vitesses 5 comporte deux arbres secondaires 7a et 7b respectivement parallèles aux arbres primaires 4a et 4b. Chaque arbre secondaire 7a, respectivement 7b, est équipé de pignons fous 8a, respectivement 8b, qui coopèrent avec des pignons de vitesses 9a, respectivement 9b, portés par l'arbre primaire 4a, respectivement 4b. Chaque arbre secondaire 7a, 7b porte également des synchroniseurs à crabot 10 permettant de solidariser en rotation les pignons fous 8a, 8b à l'arbre secondaire de manière à transmettre un couple entre l'arbre primaire 4a ou 4b et l'arbre secondaire 7a ou 7b. Les deux arbres secondaires 7a et 7b coopèrent avec un pignon de sortie de boite de vitesse 11 relié à un différentiel 12 afin de transmettre le couple aux roues motrices 13.

Par exemple, l'arbre primaire 4a porte les pignons correspondant aux rapports impairs et l'arbre primaire 4b porte les pignons correspondant aux rapports pairs. Les pignons 9a et 9b des arbres primaires 4a et 4b engrènent sur les pignons fous 8a et 8b portés par les arbres secondaires 7a et 7b. Lorsque ces pignons fous sont rendus solidaires de l'arbre secondaire 7a ou 7b par la manoeuvre des synchroniseurs 10, le couple de l'arbre primaire correspondant est transmis à l'arbre secondaire avec la démultiplication définie par le couple d'engrenage en prise par le crabot du synchroniseur. Les arbres secondaires 7a et 7b sont connectés au pignon 11 de sortie de boîte de vitesses 5 par un couple d'engrenages 14a et 14b. Le pignon 11 de sortie de boîte de vitesses 5 est relié au différentiel 12 par un arbre de sortie 16 de boîte de vitesses. Le différentiel 12 transmet alors le couple de sortie de boîte de vitesses vers les roues motrices 13. Ainsi, les éléments 4a, 7a, 8a et 9a constituent une demi-boîte de vitesses avec de rapports impairs et les éléments 4b, 7b, 8b et 9b constituent une demi-boîte de vitesses avec de rapports pairs.

Le principal intérêt d'une telle transmission à double embrayage est de pouvoir associer le bon rendement de la boîte de vitesses manuelle avec le confort d'une boite de vitesses automatique, en transférant notamment le couple moteur d'une demie boite vers l'autre demi-boîte lors du changement de rapport sans interrompre le couple transmis aux roues. Un calculateur moteur 17 pilote le moteur thermique 2 et fournit des informations notamment de couple moteur, de régime moteur et d'intention conducteur à un calculateur de transmission 18 qui pilote des actionneurs d'embrayage 19 qui manoeuvrent le double embrayage 6 et des actionneurs de passage de vitesses 20 qui manoeuvrent les synchroniseurs 10.

Des capteurs de position ou de vitesse angulaire peuvent également être installés en divers emplacements pour mesurer les vitesses de rotation des divers arbres de la transmission. La figure 1 montre ainsi, à titre illustratif :

- un capteur 21 qui mesure la vitesse de rotation $W_p$ du vilebrequin 3, ou de l'élément primaire du volant moteur 15, et est connecté au calculateur moteur 17 qui transmet via un bus de donnée l'information de vitesse moteur $W_p$ au calculateur de transmission 18. Le capteur 21 peut être également connecté directement au calculateur de transmission 18 en plus du calculateur moteur 17 pour des raisons de temps de latence ;

- un capteur 22 qui mesure la vitesse de rotation $W_{damp}$ de l'élément secondaire du volant moteur et qui est connecté au calculateur de transmission 18.

- un capteur 23 qui mesure la vitesse de rotation $W_s$ de l'arbre 16 de sortie de la boîte de vitesses, ou la vitesse de rotation en entrée du différentiel 12;

- des capteurs 24 qui mesurent la vitesse de rotation $W_r$ des arbres des roues motrices 13 et qui sont connectés à un calculateur ABS (non représenté) qui transmet l'information sur un bus intersystème auquel le calculateur de transmission 18 est connecté.

Ces capteurs sont de préférence réalisés sous la forme de capteurs de position angulaire présentant une forte résolution sur un tour de l'arbre, par exemple au moins 400 points par tour, de préférence au moins 600 points par tour, voire idéalement 2000 à 2500 points par tour. Cette résolution élevée est utile pour pouvoir estimer les couples transmis en mesurant des déformations en torsion des arbres, comme il sera expliqué plus bas. Lorsque la mesure doit être effectuée à un régime faible avec un rapport engagé élevé, une résolution d'autant plus grande est nécessaire.

La technologie du capteur de position angulaire peut-être quelconque, notamment optique, magnétique, par exemple à effet hall ou fluxgate, ou capacitive. Dans un mode de réalisation, une cible est placée sur l'arbre dont on veut mesurer l'angle. Cette cible peut-être une cible métallique à haute résolution, un couple de plusieurs cible, une cible polaire magnétique ou un ensemble de roues polaires, ou encore un aimant collé ou assemblé sur l'arbre dont on mesure le champ qui varie avec la rotation.

Avec un capteur de position angulaire, on mesure directement l'angle, dont on dérive la vitesse de l'arbre soit en faisant la différence d'angle entre deux instants de mesure successifs, soit en réalisant un estimateur linéaire bouclé sur l'angle mesuré et estimant par reconstruction la vitesse de rotation.

Dans un mode de réalisation, l'estimateur de vitesse met en oeuvre un modèle numérique du type :

$$\frac{d\hat{\alpha}}{dt} = -\frac{1}{\tau}\hat{\alpha} + L(\alpha - \hat{\alpha})$$

Où $\alpha$ désigne l'angle mesuré et $\hat{\alpha}$ désigne l'angle estimé, et où $\tau$ et L sont deux paramètres fixés choisis en fonction de la précision souhaitée sur l'information vitesse de l'arbre $\frac{d\hat{\alpha}}{dt}$.

Pour gérer le pilotage des embrayages, le calculateur de transmission 18 a besoin de déterminer le couple transmis par chaque embrayage du double embrayage 6. On va maintenant décrire des estimateurs de couple selon plusieurs modes de réalisation pouvant être employés pour cela. Suivant les modes de réalisation, il est possible d'utiliser un sous-ensemble des capteurs de vitesse angulaire décrits ci-dessus. La description des modes de réalisation des estimateurs ci-dessous montrera en outre quels capteurs sont nécessaires dans chaque cas.

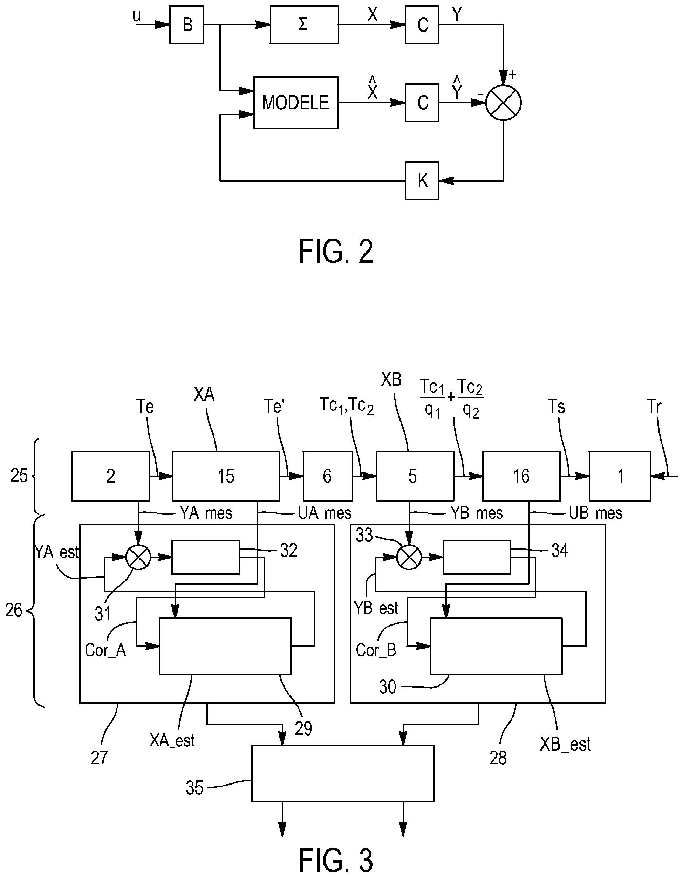

En référence à la figure 2, on expose quelques principes de fonctionnement généraux d'un estimateur à entrée inconnue servant à estimer l'état X d'un système $\Sigma$.

L'état X est un vecteur constitué de plusieurs variables d'état, dont certaines sont mesurées et d'autres ne sont pas mesurées. La matrice d'observation C extrait les variables d'état mesurées, c'est-à-dire que l'état mesuré Y=CX est le vecteur d'état réduit aux variables d'état effectivement mesurées dans le système rèel $\Sigma$. Le système réagit à une sollicitation extérieure Bu représentée par un vecteur d'excitation u comportant une ou plusieurs variables d'excitation multiplié par une matrice de gain B.

Parallèlement à ce système réel muni de capteurs de mesure, un modèle numérique est mis en oeuvre pour estimer l'état complet du système, et donc notamment les variables d'état qui ne sont pas mesurées. On note $\hat{X}$ l'état estimé à partir du modèle. On applique la même matrice d'observation C à l'état estimé $\hat{X}$ et on calcule la différence entre l'état mesuré Y et l'état estimé de sortie $\hat{Y} = C.\hat{X}$. A partir de cette différence et d'un gain K, on calcule un paramètre d'erreur $\varepsilon = K.(Y - \hat{Y})$ qui est réinjecté dans le modèle pour faire converger l'état estimé vers l'état réel.

En pratique une hypothèse est posée que le système réel $\Sigma$ est conforme à un modèle physique possédant une évolution linéaire pouvant être caractérisée par un matrice d'évolution A, de sorte que l'état X satisfait :

$$\dot{X} = AX + Bu$$

où $\dot{X}$ désigne la dérivée temporelle de X.

Le modèle numérique est donc basé sur le système d'équations différentielles :

$$\begin{cases} \dot{\hat{X}} = A\hat{X} + Bu + K.(Y - \hat{Y}) \\ \hat{Y} = C.\hat{X} \end{cases}$$

Ces équations peuvent être résolues sous réserve de remplir une condition d'observabilité, connue de l'homme du métier des observateurs à entrée inconnue. Il faut déterminer la matrice de gain K de l'observateur telle que la matrice (A-KC) soit une matrice stable. Ce calcul s'effectue en imposant un polynôme caractéristique de la matrice (A-KC), noté $P_{but}(\lambda)$, et en résolvant l'équation $P_{but}(\lambda)=P_{A-KC}(\lambda)$. Selon la structure de la matrice d'observation C, certains éléments de la matrice de gain K sont inutiles. En effet, si la matrice d'observation C comporte des zéros, le placement de pôles ne dépend que d'une partie des gains $k_{ij}$ composant la matrice de gain K.

Une représentation schématique de haut niveau d'un dispositif de mesure des couples est donnée sur la figure 3. La partie supérieure 25 de la figure 3 représente une décomposition fonctionnelle du véhicule réel tel que décrit à la figure 1, dans laquelle sont identifiées des unités dynamiques exerçant des forces les unes sur les autres, à savoir :

- le moteur 2,
- l'élément primaire du double volant moteur 15 recevant un couple moteur $T_e$ depuis le moteur 2,
- le double embrayage 6 recevant un couple moteur amorti $T_e'$ depuis l'élément secondaire du double volant moteur 15,
- la boîte de vitesses 5 recevant deux couples d'entrée $Tc_1$ et $Tc_2$ respectivement depuis chaque embrayage du double embrayage 6,
- l'arbre de sortie 16 de la boîte de vitesses 5 recevant depuis la boite de vitesse la somme pondérée par les rapports de transmission respectifs $q_1$ et $q_2$ des deux arbres secondaires 7a et 7b, soit $(\frac{Tc_1}{q_1} + \frac{Tc_2}{q_2})$, et
- le véhicule 1 dans son ensemble recevant d'une part un couple transmis $T_s$ depuis l'arbre de sortie 16 de la boîte de vitesses 5 et un couple résistant global $T_r$ représentant la résistance au roulement exercée par la chaussée sur les roues 13.

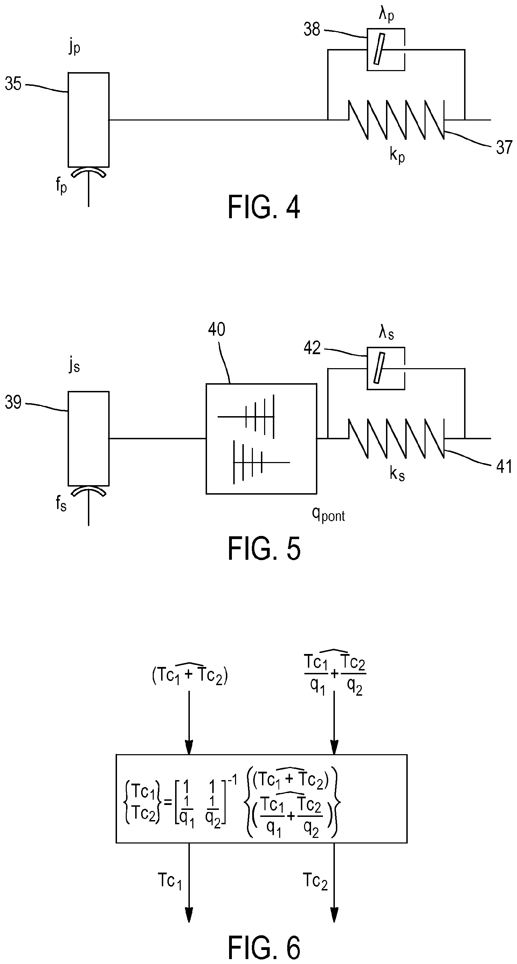

La partie inférieure 26 de la figure 3 représente une décomposition fonctionnelle du dispositif de mesure. Ce dispositif comporte deux estimateurs à entrées inconnues 27 et 28, indépendants l'un de l'autre et basés sur des modèles physiques respectivement 29 et 30. De tels modèles physiques 29 et 30 sont illustrés plus en détail en regard respectivement des figures 4 et 5.

Le premier estimateur 27 simule le volant moteur 15 comme un système déformable en torsion. Dans le premier estimateur 27, un vecteur d'état YA_mes correspondant à l'état XA du volant moteur 15 réduit aux variables d'état mesurées comporte la mesure de la vitesse angulaire $W_p$ du vilebrequin 3 fournie par le capteur 21 et la mesure de la vitesse angulaire $W_{damp}$ en sortie de l'élément secondaire du volant moteur, qui est mesurée par le capteur 22.

Le système représenté par le premier estimateur 27 comprend un vecteur d'excitation UA_mes qui comprend les mesures de la vitesse de rotation $W_p$ du vilebrequin 3 obtenue par le capteur 21 et de la vitesse de rotation $W_{damp}$ de l'élément secondaire du volant moteur 15 obtenue à partir du capteur 22 placé en vis-à-vis de l'élément secondaire du volant moteur 15, ou en vis-à-vis de l'entrée du mécanisme d'embrayage.

Le premier estimateur 27 construit une estimation $\widehat{T_e}{}'$ du couple $T_e'$ transmis par l'élément secondaire du volant moteur 15 sur le double embrayage 6. Le couple $T_e'$ correspond à la somme $Tc_1 + Tc_2$ des couples d'embrayages transmis par l'élément secondaire du volant moteur 15 aux arbres d'entrée 4a et 4b des deux demies boites de vitesse.

Le couple $\widehat{T_e{}'}$ correspond donc à un couple estimé $\widehat{Tc_1 + Tc_2}$ de la somme des couples d'embrayage.

Le premier estimateur 27 utilise le modèle 29 de la figure 4 où :

- $J_p$ correspond à l'inertie du moteur et du vilebrequin 3,
- $k_p$ est la raideur en torsion du double volant moteur 15,
- $\lambda_p$ est l'amortissement visqueux en torsion du double volant moteur 15.

$k_p$ et $\lambda_p$ peuvent être des constantes ou être des variables linéaires où non linéaires et dépendre ainsi de la vitesse et du couple transmis.

Un vecteur d'état estimé XA_est du premier modèle 29 comprend notamment la vitesse de rotation $W_p$ du vilebrequin 3, la vitesse de rotation $W_{damp}$ de l'élément secondaire du volant moteur 15 et est augmenté des entrées inconnues du couple moteur $T_e$, du couple $T_e'$ transmis par l'élément secondaire du volant moteur 15, ainsi que des dérivées successives de ces variable d'état jusqu'à un ordre donné.

Les données estimées par le premier modèle 29 telles que la vitesse de rotation $\hat{W}p$ du vilebrequin 3 et la vitesse de rotation $\widehat{Wdamp}$ de l'élément secondaire du volant moteur 15 sont alors stockées dans un vecteur d'estimation YA_est. Ce vecteur d'estimation YA_est est comparé par un comparateur 31 au vecteur de mesure YA_mes contenant la ou les mêmes grandeurs réellement mesurées.

Un signal d'erreur est alors généré et introduit dans un correcteur 32 qui produit un vecteur de corrections cor_A permettant de corriger la dérivée du vecteur d'état XA_est pour converger vers la valeur réelle de ce vecteur XA.

Le couple $\hat{T}_e$ est déduit du vecteur d'état estimé XA_est comme visible de la première équation (1) du système d'équation décrit ci-après en regard de la figure 4. Le couple $\widehat{T_e{}'}$ est alors déduit du couple $\hat{T}_e$ et du couple inertiel $J_{damp} * dW_{damp}/dt$ comme visible de la seconde équation (2) du système d'équation décrit ci-après en regard de la figure 4.

Dans un autre mode de réalisation non représenté, l'inertie J correspond à l'inertie du volant secondaire $J_{damp}$, et le premier estimateur 27 intègre alors comme entrée inconnue le couple $T_e'$ en sortie de l'élément secondaire du volant moteur 15 ce qui permet de reconstruire directement $\widehat{T_e{}'}$.

Le second estimateur 28 est situé en aval de la boîte de vitesses 5. Le second estimateur 28 simule la liaison entre l'arbre de sortie 16 de la boîte de vitesses 5 et les roues 13 du véhicule 1.

Un vecteur d'état YB_mes, correspondant à un état XB du sous-système simulé réduit aux variables d'état mesurées, comporte la mesure de la vitesse de rotation $W_s$ de l'arbre 16 de sortie de la boîte de vitesses 5 mesurée par le capteur 23 et la mesure de la vitesse de rotation $W_r$ des arbres des roues 13. La vitesse de rotation $W_r$ des arbres de roues 13 est obtenue par exemple par moyennage de valeurs fournies par deux capteurs 24 situés chacun au niveau d'un des arbres des roues motrices 13. Dans un autre exemple, la vitesse de rotation $W_r$ des arbres des roues 13 est obtenue par un unique capteur 24 situé au niveau d'un unique arbre d'une des roues motrices. Le second estimateur 28 construit une estimation de la somme des couples pondérée par les rapports de la boîte de vitesses $\left(\dfrac{\widehat{Tc_1}}{q_1} + \dfrac{\widehat{Tc_2}}{q_2}\right)$.

Le second estimateur 28 utilise le modèle 30 de la figure 5 où $J_s$ correspond à l'inertie de l'arbre 16 de sortie de la boite de vitesse, $k_s$ à la raideur et $\lambda_s$ à l'amortissement. Un seul modèle 30 du second estimateur 28 est représenté sur la figure 3 mais un modèle pour chaque arbre de roue peut également être utilisé. $k_s$ et $\lambda_s$ peuvent être constants ou varier de manière linéaire ou non linéaire et ainsi dépendre de la vitesse et du couple transmis.

Le second estimateur 28 peut présenter la même structure que le premier estimateur 27. Un vecteur d'excitation UB_mes comprend la vitesse de rotation $W_s$ de l'arbre 16 de sortie de boîte de vitesses 5 obtenue par le capteur 23 et la vitesse de rotation $W_r$ des arbres des roues 13 obtenue par le ou les capteurs 24.

Un vecteur d'état estimé XB_est du modèle 30 comprend la vitesse de rotation Ws de l'arbre 16 de sortie de boîte de vitesses 5 et la vitesse $W_r$ des arbres des roues 13 et peut être augmenté de l'entrée inconnue du couple $T_s$ de l'arbre 16 de sortie de la boîte de vitesses 5 ainsi que de leurs dérivées successives. Ce couple $T_s$ de sortie de la boîte de vitesses 5 correspond à la somme pondérée par chaque rapport de transmission sur chaque arbre de la boîte de vitesses 5 des couples respectifs d'embrayage Tc$_1$, Tc$_2$, c'est-à-dire $(\frac{Tc_1}{q_1} + \frac{Tc_2}{q_2})$.

Un vecteur YB_est est extrait de l'état estimé XB_est. YB_est correspond au contenu équivalent de YB_mes. Un comparateur 33 compare YB_est et YB_mes et envoie le résultat de cette comparaison à un correcteur 34. Le correcteur 34 génère une correction Cor_B qui est utilisée pour modifier les dérivées du vecteur d'état estimé XB_est (ou le vecteur d'état XB_est à l'instant précédent dans le cas d'une implémentation sur un système échantillonné) et faire converger ledit vecteur d'état estimé XB_est vers le vecteur d'état réel XB.

Le second estimateur 28 permet ainsi de reconstruire la somme des couples d'embrayage pondérés par les rapports de transmission respectifs, c'est-à-dire $(\widehat{\frac{Tc_1}{q_1} + \frac{Tc_2}{q_2}})$.

La somme des couple $\widehat{Tc_1 + Tc_2}$ estimée par le premier estimateur 27 et la somme des couples pondérés par les rapports de transmission des demies boîtes de vitesse $(\widehat{\frac{Tc_1}{q_1} + \frac{Tc_2}{q_2}})$ estimée par le second estimateur 28 est ensuite transmise à un bloc de traitement 35. Ce bloc de traitement 35 reconstruit chaque couple d'embrayage estimé $\widehat{Tc_1}$ et $\widehat{Tc_2}$ à partir des couples estimés $\widehat{Tc_1 + Tc_2}$ et $(\widehat{\frac{Tc_1}{q_1} + \frac{Tc_2}{q_2}})$ fournis par les deux estimateurs 27 et 28.

La figure 4 représente schématiquement le modèle physique utilisé pour représenter le volant moteur 15 dans le premier estimateur 27. Ce modèle comporte :

- une masse tournante 36 caractérisée par un moment d'inertie $J_p$ et représentant l'inertie globale du moteur et du vilebrequin 3,

- un ressort de torsion 37 caractérisé par un coefficient de raideur de torsion $k_p$, représentant la raideur de torsion globale des masses tournantes de la liaison entre le moteur 2 et l'élément secondaire du volant moteur 15,

- un amortisseur visqueux 38 caractérisé par un coefficient d'amortissement visqueux en torsion $\lambda_p$, représentant l'amortissement visqueux de torsion entre l'élément primaire et l'élément secondaire du volant moteur 15, et

- optionnellement, un frottement visqueux caractérisé par un coefficient de frottement $f_p$, représentant les frottements extérieurs exercés sur les masses tournantes du volant moteur 15 (dissipation externe).

Ce modèle physique satisfait les équations dynamiques suivantes :

$$(1) \quad J_p \cdot \dot{W}_p = T_e - f_p \cdot W_p - k_p \int (W_p - W_{damp}).dt - \lambda_s (W_p - W_{damp})$$

$$(2) \quad J_{damp} \cdot \dot{W}_{damp} = T_e - T_e{'}$$

D'où il ressort que

$$Tc_1 + Tc_2 = J_p \cdot \dot{W}_p + f_p \cdot W_p + k_p \int (W_p - W_{damp}).dt + \lambda_p (W_p - W_{damp}) - J_{damp} \cdot \dot{W}_{damp}$$

De manière analogue à la figure 4, la figure 5 représente schématiquement le modèle physique utilisé pour représenter la liaison entre l'arbre de sortie 16 de la boite de vitesse 5 et les roues 13 du véhicule 1. Ce modèle comporte :

- une masse tournante 39 caractérisée par un moment d'inertie Js et représentant l'inertie globale de l'arbre de sortie 16 de la boîte de vitesses 5,
- un rapport de pont 40 caractérisé par un coefficient $q_{pont}$ représentant le différentiel 12,
- un ressort de torsion 41 caractérisé par un coefficient de raideur de torsion $k_s$, représentant la raideur de torsion globale des masses tournantes de la liaison entre l'arbre 16 de sortie de la boite de vitesse 5 et les roues 13 du véhicule 1,
- un amortisseur visqueux 42 caractérisé par un coefficient d'amortissement visqueux en torsion $\lambda_s$, représentant l'amortissement visqueux de torsion des masses tournantes de la liaison entre l'arbre 16 de sortie de la boite de vitesse 5 et les roues 13 du véhicule 1, et
- optionnellement, un frottement visqueux caractérisé par un coefficient de frottement $f_s$, représentant les frottements extérieurs exercés sur les masses tournantes de la liaison entre l'arbre 16 de sortie de la boite de vitesse 5 et les roues 13 du véhicule 1 (dissipation externe).

Ce modèle physique satisfait les équations dynamiques suivantes :

$$J_s \cdot \dot{W}_s = T_s - f_s \cdot W_s - q_{pont} k_t \int (q_{pont} W_s - W_r).dt - q_{pont} \lambda_s (q_{pont} W_s - W_r)$$

et

$$T_s = \frac{Tc_1}{q_1} + \frac{Tc_2}{q_2}$$

D'où il ressort que

$$\frac{Tc_1}{q_1} + \frac{Tc_2}{q_2} = J_s \cdot \dot{W}_s + f_s \cdot W_s + q_{pont} k_s \int (q_{pont} W_s - W_r).dt + q_{pont} \lambda_s (q_{pont} W_s - W_r)$$

Comme expliqué en regard de la figure 3, le bloc de traitement 35 permet de résoudre le système d'équation obtenu à partir de la somme $\widehat{Tc_1 + Tc_2}$ estimée par le premier estimateur 27 et de la somme $\left(\widehat{\frac{Tc_1}{q_1} + \frac{Tc_2}{q_2}}\right)$ estimée par le second estimateur 28 afin de déterminer $Tc_1$ et $Tc_2$ correspondant aux couples appliqués à chaque arbre primaire 4a et 4b.

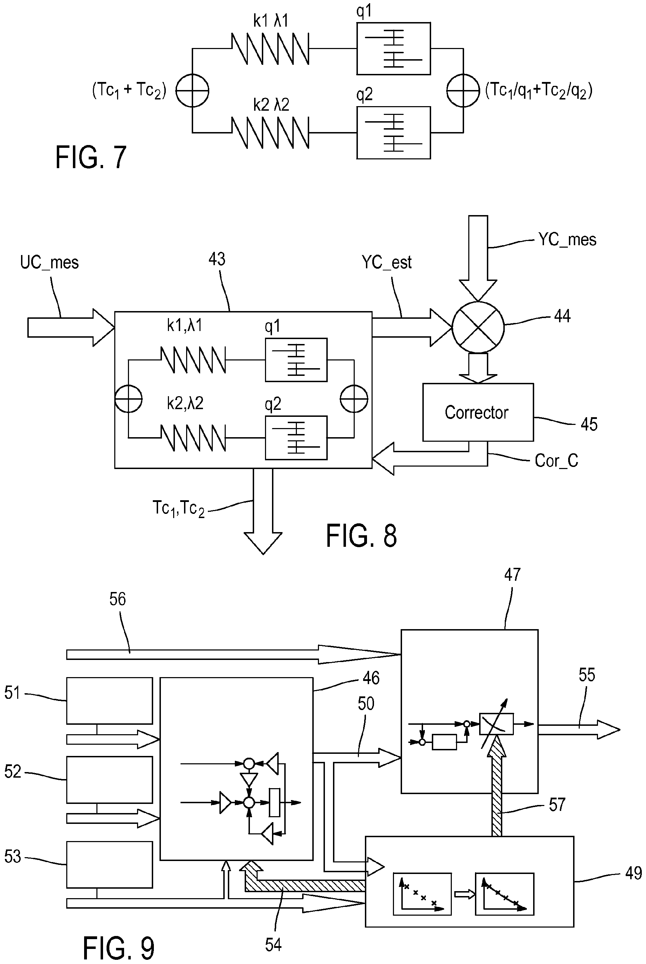

La figure 6 montre un premier mode de réalisation pour le bloc de traitement chargé de la reconstruction des couples d'embrayage $Tc_1$ et $Tc_2$ à partir des sommes de couple $\widehat{Tc_1 + Tc_2}$ et des sommes de couples pondérées $\left(\widehat{\frac{Tc_1}{q_1} + \frac{Tc_2}{q_2}}\right)$ estimés respectivement par le premier estimateur 27 et le second estimateur 28. Le bloc de traitement 35 multiplie le vecteur constitué des sommes de couple $\widehat{Tc_1 + Tc_2}$ et des sommes de couples pondérées $\left(\widehat{\frac{Tc_1}{q_1} + \frac{Tc_2}{q_2}}\right)$ estimés respectivement par le premier estimateur 27 et le second estimateur 28 par la matrice inverse $\begin{bmatrix} 1 & 1 \\ \frac{1}{q_1} & \frac{1}{q_2} \end{bmatrix}^{-1}$ correspondant au schéma de la figure 8.

La figure 7 montre un autre mode de réalisation comportant un modèle présentant les raideurs d'arbres 4a et 4b avec leurs caractéristique de raideur $k_1$, $k_2$ et leurs amortissement $\lambda_1$ et $\lambda_2$ ainsi que la somme des couples avec les rapports de transmission associés $q_1$ et $q_2$.

Un troisième estimateur 43 à entrées inconnues tel que représenté en figure 8 est alors construit autour du modèle physique de la figure 7. Ce troisième estimateur 43 simule la boîte de vitesses 5. Un état XC de la boîte de vitesses 5 comporte comme variables d'état la vitesse $W_1$ et $W_2$ des arbres d'entrée 4a et 4b des deux demies boites de vitesse, la vitesse de rotation $W_s$ de l'arbre de sortie 16 de la boîte de vitesse, la somme des couples estimée par le premier et le second estimateur 27 et 28, respectivement $\widehat{Tc_1 + Tc_2}$ et $\left(\widehat{\frac{Tc_1}{q_1} + \frac{Tc_2}{q_2}}\right)$, les couples $Tc_1$ et $Tc_2$ transmis par chaque embrayage à chacun des arbres d'entrée de la boîte de vitesses 5, les angles $\alpha_1$ et $\alpha_2$ correspondant à la déformation des arbres de demies boites de vitesse entre les points de mesures de vitesse de rotation $W_1$ et $W_2$ des arbres d'entrée des demies boites de vitesse et le point de mesure de l'arbre 16 de sortie de la boite de vitesse 5, ainsi que des dérivées successives de ces variable d'état jusqu'à un ordre donné. Les mesures des vitesses de rotation $W_1$

et $W_2$ des arbres primaires 4a et 4b sont par exemple obtenues à l'aide de capteurs 48 (voir figure 1) situés en regard desdits arbres 4a et 4b.

Un vecteur de sorties mesurées YC_mes, correspondant à l'état XC réduit aux valeurs mesurées par les capteurs et les valeurs estimées par le premier ou le second estimateur 27 et 28 comporte les vitesses de rotation $W_1$ et $W_2$ des arbres primaires 4a et 4b, la vitesse de rotation $W_s$ de l'arbre de sortie 16 de la boite de vitesse 5 ainsi que les sommes de couple $\widehat{Tc_1 + Tc_2}$ et les sommes de couples pondérées $\left(\widehat{\frac{Tc_1}{q_1} + \frac{Tc_2}{q_2}}\right)$ estimés par le premier estimateur 27 et le second estimateur 28. De manière analogue aux systèmes 27 ou 28, un vecteur d'état estimé YC_est du troisième système 41 est extrait d'un état estimé XC du système et comporte des variables correspondant aux variables de YC_mes. De préférence, YC_mes et YC_est comportent cinq variables d'état correspondant chacune à une de ces valeurs mesurées par un capteur et estimées par les premier et second estimateurs.

Les deux vecteurs YC_mes et YC_est sont alors comparés par un comparateur 44 et un signal d'erreur est alors généré et fourni à l'entrée d'un correcteur 45 qui calcule les corrections à ajouter à un vecteur d'état XC_est (ou le vecteur d'état XC_est à l'instant précédent dans le cas d'une implémentation sur un système échantillonné).

Le modèle de la figure 7 répond aux équations suivantes :

$$\left\{\begin{matrix}\widehat{\dfrac{d\alpha_1}{dt}} \\ \dfrac{d\alpha_2}{dt}\end{matrix}\right\} = \begin{bmatrix}0 & 0 \\ 0 & 0\end{bmatrix}\left\{\begin{matrix}\widehat{\alpha_1} \\ \alpha_2\end{matrix}\right\} + \begin{bmatrix}1 & 0 & -1 \\ 0 & 1 & -1\end{bmatrix}\left\{\begin{matrix}\omega_1 \\ \omega_2 \\ \omega_s\end{matrix}\right\}$$

$$+ \begin{bmatrix}l_{11} & l_{12} \\ l_{21} & l_{22}\end{bmatrix}\left(\left\{\begin{matrix}\widehat{(Tc_1 + Tc_2)} \\ \widehat{\left(\dfrac{Tc_1}{q_1} + \dfrac{Tc_2}{q_2}\right)}\end{matrix}\right\} - \begin{bmatrix}k_1 & k_2 \\ \dfrac{k_1}{q_1} & \dfrac{k_2}{q_2}\end{bmatrix}\left\{\begin{matrix}\widehat{\alpha_1} \\ \alpha_2\end{matrix}\right\}\right.$$

$$\left. - \begin{bmatrix}\lambda_1 & \lambda_2 & -(q_1\lambda_1 + q_2\lambda_2) \\ \dfrac{\lambda_1}{q_1} & \dfrac{\lambda_2}{q_2} & -(\lambda_1 + \lambda_2)\end{bmatrix}\left\{\begin{matrix}\omega_1 \\ \omega_2 \\ \omega_s\end{matrix}\right\}\right)$$

$$\left\{\begin{matrix}\widehat{Tc_1} \\ Tc_2\end{matrix}\right\} = \begin{bmatrix}k_1 & 0 \\ 0 & k_2\end{bmatrix}\left\{\begin{matrix}\widehat{\alpha_1} \\ \alpha_2\end{matrix}\right\} + \begin{bmatrix}\lambda_1 & 0 & -(\lambda_1 q_1) \\ 0 & \lambda_2 & -(\lambda_2 q_2)\end{bmatrix}\left\{\begin{matrix}\omega_1 \\ \omega_2 \\ \omega_s\end{matrix}\right\}$$

Le troisième estimateur 43 calcule alors $Tc_1$ et $Tc_2$ à partir de l'estimation de $\alpha_1$ et $\alpha_2$ et des raideurs $k_1$ et $k_2$ et éventuellement des amortissements $\lambda_1$ et $\lambda_2$ respectifs en résolvant ce système d'équations.

Les paramètres J, k, $\lambda$ des modèles des estimateurs peuvent être des constantes ou des variables. De telles variables peuvent varier de manière linéaire ou non linéaire. Ces variables peuvent varier en fonction du couple moteur, de la température, etc. Pour être exploitées dans les estimations, ces paramètres sont mesurés et mis à jour au cours de la vie du véhicule. Pour cela, ces paramètres peuvent être enregistrés et tabulés pour des états stabilisés donnés des systèmes correspondant, comme par exemple dans le cas où un seul embrayage transmet le couple, en régime stabilisé et en utilisant l'information de couple moteur délivrée par le contrôle moteur qui est alors suffisamment précise.

En référence à la figure 9, on va maintenant décrire un système de commande d'un embrayage dans lequel un estimateur de couple tel que décrit ci-dessus peut être employé.

Le système de commande représenté sur la figure 9 est constitué de trois modules fonctionnels principaux : un module d'estimation du couple 46, un module de correction du couple 47 et un module d'apprentissage de la caractéristique de couple 49.

Le module d'estimation du couple 46 calcule en temps réel le couple transmis par l'embrayage ainsi que la capacité de couple 50 à partir :

- des informations dynamiques 51 du moteur thermique et/ou de la machine électrique d'une chaîne de traction hybride, telles que la vitesse moteur, et le couple moteur,
- des informations dynamiques 52 du véhicule telles que la vitesse de l'arbre primaire, le rapport de transmission engagé et la vitesse du véhicule,

- des informations de position 53 des actionneurs d'embrayage, et
- des courbes caractéristiques apprises 54 représentant le couple transmis en fonction de la position de l'embrayage.

Le module de correction de couple calcule les consignes de position 55 à appliquer à l'actionneur d'embrayage 19 de façon à atteindre en temps réel la consigne de couple 56 demandée par le contrôleur de transmission 18 sur l'embrayage concerné. Ces consignes sont calculées en fonction de l'estimation de la capacité de couple actuelle 50 et de la courbe caractéristique 57 représentant la position de l'embrayage en fonction du couple à transmettre. Cette correction de couple permet d'ajuster rapidement en temps réel le couple transitant dans l'embrayage face aux variations rapide engendrées par la modification du coefficient de frottement de l'embrayage sous l'effet de la température et de compenser ainsi l'écart entre la courbe apprise 53 et la réalité à un instant donné.

Le module d'apprentissage des caractéristiques de couple d'embrayage 49 identifie et met à jour les paramètres des courbes 54 et 57 à chaque opération d'embrayage afin de suivre les phénomènes lents tels que l'usure et les dispersions de fabrication. Cette mise à jour est effectuée à partir des informations de capacité de couple estimée de l'embrayage 46 et de la position mesurée de l'actionneur d'embrayage 19.

D'autres caractéristiques d'un tel système de commande sont fournies dans la publication FR-A-2863327.

Les méthodes d'estimation de couple décrites ci-dessus en référence à un double embrayage et à un moteur thermique s'appliquent aussi à d'autres systèmes de transmission, notamment à simple embrayage, à moteur électrique et à motorisation hybride thermique et électrique.

Certains des éléments représentés, notamment les estimateurs de couple, les contrôleurs et les unités de commande, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation interprétés ou compilés, par exemple C, C++, Java ou VHDL. Cette liste n'est pas exhaustive.

Lorsque l'estimation dépend d'un paramètre pouvant prendre plusieurs valeurs, notamment les rapports de réduction q de la boite de vitesse, il est possible de mettre en oeuvre plusieurs calculateurs fonctionnant parallèlement chacun avec une valeur distincte du paramètre, ce qui permet de sélectionner très rapidement l'estimation pertinente à tout instant en sélectionnant le résultat fourni par le calculateur qui correspond à la valeur réelle du paramètre à l'instant concerné.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

**Revendications**

1. Procédé pour déterminer le couple ($Tc_1$, $Tc_2$) transmis par chaque embrayage dans une chaîne de transmission de véhicule automobile à double embrayage, dans lequel on emploie une chaîne de transmission comportant :

   - un arbre moteur (3) destiné à être entraîné en rotation par un moteur (2) du véhicule automobile (1),
   - un double volant amortisseur (15) comportant un élément primaire et un élément secondaire, l'élément primaire étant solidaire en rotation de l'arbre moteur et l'élément secondaire étant accouplé à l'élément primaire via un élément d'amortissement,
   - une boîte de vitesses (5) comportant une première demi-boîte et une seconde demi-boîte indépendantes l'une de l'autre, chaque demi-boîte comportant un arbre d'entrée (4a, 4b) destiné à être accouplé par friction à l'élément secondaire du double volant amortisseur par un premier, respectivement second, embrayage (6), un arbre secondaire (7a, 7b) et une pluralité d'engrenages synchroniseurs (10) aptes à accoupler l'arbre d'entrée et l'arbre secondaire selon une pluralité de rapports de transmission, l'arbre secondaire de chaque demi-boîte étant accouplé à un arbre de sortie (16) de la boîte de vitesses et des arbres des roues motrices (13) du véhicule automobile étant accouplés à l'arbre de sortie de la boîte de vitesses via un différentiel (12),

   le procédé comportant :

- mesurer une vitesse de rotation de l'arbre moteur ($W_p$),
- mesurer une vitesse de rotation ($W_{damp}$) de l'élément secondaire du double volant amortisseur,
- fournir un premier modèle numérique (27) mis en oeuvre par ordinateur qui simule le double volant amortisseur par un premier système déformable en torsion, le premier modèle numérique comportant un coefficient de raideur de torsion ($k_p$) du premier système déformable, un coefficient d'amortissement visqueux en torsion ($\lambda_p$) du premier système déformable et une pluralité de premières variables représentant un état instantané (XA) dudit premier système déformable en torsion, dans lequel les premières variables sont choisies dans l'ensemble constitué de la vitesse de rotation de l'arbre moteur, la vitesse de rotation de l'élément secondaire du double volant amortisseur, un couple ($T_e$) transmis par l'arbre moteur, un couple cumulé ($Tc_1 + Tc_2$) transmis par l'élément secondaire du double volant amortisseur aux deux demies boîtes de vitesse, leurs dérivées et intégrales temporelles à tous les ordres, et des combinaisons de ces variables, les premières variables comportant une première variable de convergence (YA_est) choisie dans l'ensemble constitué de la vitesse de rotation de l'arbre moteur, la vitesse de rotation de l'élément secondaire du double volant amortisseur, leurs dérivées et intégrales temporelles à tous les ordres, et les combinaisons de ces variables,
- calculer les premières variables (XA_est) du premier modèle numérique à des instants successifs en faisant converger (31) la première variable de convergence (YA_est) avec la vitesse de rotation mesurée de l'arbre moteur et/ou la vitesse de rotation mesurée de l'élément secondaire du double volant amortisseur, et
- déterminer le couple cumulé $(\widehat{Tc_1 + Tc_2})$ transmis par les premiers et second embrayages depuis l'élément secondaire du double volant amortisseur à des instants successifs en fonction des premières variables calculées (XA_est), ledit couple cumulé correspondant à la somme des couples appliqués par le premier et le second embrayage sur les arbres d'entrée respectivement de la première et la seconde demi-boîte de vitesse,

le procédé comportant en outre

- mesurer une vitesse de rotation ($W_s$) de l'arbre de sortie de la boîte de vitesse,
- mesurer une vitesse de rotation ($W_r$) des arbres des roues,
- fournir un second modèle numérique (28) mis en oeuvre par ordinateur qui simule par un second système déformable en torsion l'ensemble constitué de l'arbre de sortie (16) de la boîte de vitesses (5), le différentiel (12) et les arbres des roues motrices, le second modèle numérique comportant un coefficient de raideur de torsion ($k_s$) du second système déformable, un coefficient d'amortissement visqueux en torsion ($\lambda_s$) du second système déformable et une pluralité de secondes variables représentant un état instantané (XB) dudit second système déformable en torsion, dans lequel les secondes variables sont choisies dans l'ensemble constitué de la vitesse de rotation de l'arbre de sortie de la boîte de vitesse, la vitesse de rotation des arbres des roues, un couple de sortie de la boîte de vitesses $\left(\frac{Tc_1}{q_1} + \frac{Tc_2}{q_2}\right)$, leurs dérivées et intégrales temporelles à tous les ordres, et les combinaisons de ces variables, les secondes variables comportant une seconde variable de convergence (YB_est) choisie dans l'ensemble constitué de la vitesse de rotation de l'arbre de sortie de la boîte de vitesse, la vitesse de rotation des arbres des roues, leurs dérivées et intégrales temporelles à tous les ordres, et les combinaisons de ces variables,
- calculer les secondes variables (XB_est) du second modèle numérique à des instants successifs en faisant converger (33) la seconde variable de convergence (YB_est) avec la vitesse de rotation mesurée de l'arbre de sortie de la boîte de vitesses et/ou la vitesse de rotation mesurée des arbres des roues, et
- déterminer le couple de sortie $\left(\frac{\widehat{Tc_1}}{q_1} + \frac{Tc_2}{q_2}\right)$ de la boîte de vitesses à des instants successifs en fonction des secondes variables calculées (YB_est), ledit couple de sortie de la boîte de vitesses correspondant à la somme des couples d'entrée appliqués par le premier et le second embrayage sur les arbres d'entrée respectivement des premières et secondes demies boîtes de vitesse pondérés par les rapports de transmission respectifs des demies boîtes de vitesse,

et le procédé comportant en outre

- déterminer le premier couple d'entrée ($Tc_1$) agissant sur l'arbre d'entrée de la première demi-boîte de vitesses et le second couple d'entrée ($Tc_2$) agissant sur l'arbre d'entrée de la seconde demi-boîte de vitesses à des instants successifs en fonction du couple cumulé $(\widehat{Tc_1 + Tc_2})$ déterminé avec le premier modèle numérique et du couple de sortie $(\widehat{\frac{Tc_1}{q_1} + \frac{Tc_2}{q_2}})$ de la boîte de vitesses déterminé par le second modèle numérique.

2. Procédé selon la revendication 1, dans lequel au moins un des premiers et second modèles numériques comporte en outre un coefficient de frottement visqueux du système déformable correspondant.

3. Procédé selon l'une des revendications 1 à 2, dans lequel les premières variables du premier modèle numérique comportent deux variables de convergence (YA_est) qui sont respectivement la vitesse de rotation de l'arbre moteur et la vitesse de rotation de l'élément secondaire du double volant amortisseur, l'étape de calcul des premières variables du premier modèle numérique à des instants successifs étant réalisée en faisant converger les premières variables de convergence avec respectivement la vitesse de rotation mesurée de l'arbre moteur et la vitesse de rotation mesurée de l'élément secondaire du double volant amortisseur.

4. Procédé selon l'une des revendications 1 à 3, dans lequel les secondes variables du second modèle numérique comportent deux variables de convergence (YB_est) qui sont respectivement la vitesse de rotation de l'arbre de sortie de la boite de vitesse et la vitesse de rotation des arbres des roues, l'étape de calcul des secondes variables du second modèle numérique à des instants successifs étant réalisée en faisant converger les secondes variables de convergence avec respectivement la vitesse de rotation mesurée de l'arbre de sortie de la boite de vitesse et la vitesse de rotation mesurée des arbres des roues.

5. Procédé selon l'une des revendications 1 à 4, dans lequel l'étape de déterminer le premier et le second couple d'entrée agissant respectivement sur chaque arbre d'entrée des demies boites de vitesse est réalisée par un bloc de traitement (34) multipliant par une matrice inverse un vecteur constitué de la somme des couples appliqués sur chaque arbre d'entrée de la boîte de vitesses $(\widehat{Tc_1 + Tc_2})$ et de la somme de ces couples pondérés chacun par les rapport des demies boîtes respectives $(\widehat{\frac{Tc_1}{q_1} + \frac{Tc_2}{q_2}})$.

6. Procédé selon l'une des revendications 1 à 4, le procédé comportant en outre

 - mesurer la vitesse de rotation ($W_1$) de l'arbre d'entrée de la première demi-boîte de vitesse,
 - mesurer la vitesse de rotation ($W_2$) de l'arbre d'entrée de la seconde demi-boîte de vitesse,
 - fournir un troisième modèle numérique mis en oeuvre par ordinateur qui simule la boîte de vitesses par un troisième système déformable (43) en torsion, le troisième modèle numérique comportant pour chaque demi-boîte un coefficient de raideur de torsion ($k_1$, $k_2$) et un coefficient d'amortissement visqueux en torsion ($\lambda_1$, $\lambda_2$), le troisième modèle numérique comportant également une pluralité de troisièmes variables représentant un état instantané dudit troisième système déformable en torsion, dans lequel les troisièmes variables sont choisies dans l'ensemble constitué de

   ◦ la vitesse de rotation de l'arbre d'entrée de la première demi-boîte de vitesse,
   ◦ la vitesse de rotation de l'arbre d'entrée de la seconde demi-boîte de vitesse,
   ◦ la vitesse de rotation ($W_s$) de l'arbre de sortie de la boîte de vitesse,
   ◦ le couple d'entrée ($Tc_1$) agissant sur la première demi-boîte de vitesse,
   ◦ le couple d'entrée ($Tc_2$) agissant sur la seconde demi-boîte de vitesse,
   ◦ la somme $(\widehat{Tc_1 + Tc_2})$ des couples d'entrée d'embrayages agissant sur les demies boîtes de vitesse,
   ◦ le couple de sortie $(\widehat{\frac{Tc_1}{q_1} + \frac{Tc_2}{q_2}})$ de la boîte de vitesse,
   o un angle de déformation ($\alpha_1$) en torsion de la première demi-boîte de vitesses entre un point de mesure de la vitesse de rotation de l'arbre d'entrée de la première demi-boîte de vitesses et un point de mesure de la vitesse de rotation de l'arbre de sortie de la boîte de vitesse,
   ◦ un angle de déformation ($\alpha_2$) en torsion de la seconde demi-boîte de vitesses entre un point de mesure de la vitesse de rotation de l'arbre d'entrée de la seconde demi-boîte de vitesses et le point de mesure de la vitesse de rotation de l'arbre de sortie de la boîte de vitesse,
   ◦ les dérivées et intégrales temporelles à tous les ordres des variables précitées et les combinaisons de ces variables

les troisièmes variables comportant une troisième variable de convergence sortie choisie dans l'ensemble constitué de

- ◦ la vitesse de rotation de l'arbre d'entrée de la première demi-boîte de vitesse,
- ◦ la vitesse de rotation de l'arbre d'entrée de la seconde demi-boîte de vitesse,
- ◦ la vitesse de rotation de l'arbre de sortie de la boîte de vitesse,
- ◦ la somme des couples d'entrée agissant sur les demies boîtes de vitesse,
- ◦ le couple de sortie de la boîte de vitesse,
- ◦ leurs dérivées et intégrales temporelles à tous les ordres et les combinaisons de ces variables,

- calculer les troisièmes variables du troisième modèle numérique à des instants successifs en faisant converger la troisième variable de convergence avec, respectivement, la vitesse de rotation mesurée de l'arbre d'entrée de la première demi-boîte de vitesse, la vitesse de rotation mesurée de l'arbre d'entrée de la seconde demi-boîte de vitesse, la vitesse de rotation mesurée de l'arbre de sortie de la boîte de vitesses , le couple cumulé déterminé par le premier modèle numérique et le couple de sortie de la boîte de vitesses déterminé par le second modèle numérique, et
- déterminer le premier couple d'entrée ($Tc_1$) agissant sur l'arbre d'entrée de la première demi-boîte de vitesses et le second couple d'entrée ($Tc_2$) agissant sur l'arbre d'entrée de la seconde demi-boîte de vitesses à des instants successifs en fonction des angles de déformation des arbres des demies boîtes de vitesse entre les points de mesure des vitesses de rotation des arbres d'entrée respectif et le point de mesure de la vitesse de rotation de l'arbre de sortie de la boîte de vitesses calculés.

7. Procédé selon la revendication 6, les troisièmes variables du troisième modèle numérique comportent des troisièmes variables de convergence correspondant respectivement à la vitesse de rotation de l'arbre d'entrée de la première demi-boîte de vitesse, la vitesse de rotation de l'arbre d'entrée de la seconde demi-boîte de vitesse, la vitesse de rotation de l'arbre de sortie de la boîte de vitesse, la somme des couples d'entrée des demies boîtes de vitesse, le couple de sortie de la boîte de vitesse, l'étape de calcul des troisièmes variables du troisième modèle numérique à des instants successifs étant réalisée en faisant converger les troisièmes variables de convergence avec les vitesses mesurées correspondantes et avec les couples correspondants déterminés par les premier et second modèles numériques.

8. Procédé selon l'une des revendications 1 à 7, dans lequel les vitesses de rotation sont mesurées à l'aide de capteurs physiques présentant une résolution angulaire inférieure ou égale à 1/400e de tour, de préférence inférieure ou égale à 1/600e de tour.

9. Procédé selon l'une des revendications 1 à 8, dans lequel l'étape de mesurer la vitesse de rotation des arbres des roues du véhicule comporte

- mesurer la vitesse de rotation d'une première roue,
- mesurer la vitesse de rotation d'une seconde roue,

et dans lequel la vitesse de rotation des arbres des roues est la moyenne des vitesses des roues mesurées.

10. Procédé selon l'une des revendications 1 à 8, dans lequel l'étape de mesurer la vitesse de rotation des arbres des roues comporte l'étape de mesurer la vitesse de rotation d'une unique roue.

11. Procédé selon l'une des revendications 1 à 10, comportant en outre les étapes de mesurer et d'enregistrer à des instants où la chaîne de transmission du véhicule est dans un état stable le coefficient de raideur de torsion et le coefficient d'amortissement visqueux en torsion des systèmes déformables.

12. Système de mesure pour déterminer le couple transmis par chaque embrayage dans une chaîne de transmission de véhicule automobile à double embrayage, convenant pour une chaîne de transmission comportant

- un arbre moteur (3) destiné à être entraîné en rotation par un moteur (2) du véhicule automobile (1),
- un double volant amortisseur (15) comportant un élément primaire et un élément secondaire, l'élément primaire étant solidaire en rotation de l'arbre moteur et l'élément secondaire étant accouplé à l'élément primaire via un élément d'amortissement,
- une boîte de vitesses (5) comportant une première demi-boîte et une seconde demi-boîte indépendantes l'une de l'autre, chaque demi-boîte comportant un arbre d'entrée (4a, 4b) destiné à être accouplé par friction à l'élément secondaire du double volant amortisseur par un premier, respectivement second, embrayage (6), un arbre secondaire (7a, 7b) et une pluralité d'engrenages synchroniseurs (10) aptes à accoupler l'arbre d'entrée et l'arbre secondaire selon une pluralité de rapports de transmission, l'arbre secondaire de chaque demi-boîte étant accouplé à un arbre de sortie (16) de la boîte de vitesses et des arbres des roues motrices (12) du véhicule automobile étant accouplés à l'arbre de sortie de la boîte de vitesses via un différentiel (12),

- un premier capteur physique (21) apte à mesurer une vitesse de rotation ($W_p$) de l'arbre moteur,
- un second capteur physique (22) apte à mesurer une vitesse de rotation ($W_{damp}$) de l'élément secondaire du double volant amortisseur,
- un troisième capteur physique (23) apte à mesurer une vitesse de rotation ($W_s$) d'un arbre (16) de sortie de la boîte de vitesse,
- un quatrième capteur physique (24) apte à mesurer une vitesse de rotation ($W_r$) des roues,
- un dispositif de calcul mis en oeuvre par ordinateur fournissant un premier et un second modèles numériques (29, 30),

dans lequel un premier modèle numérique simule le volant amortisseur par un premier système déformable en torsion, le premier modèle numérique comportant un coefficient de raideur de torsion ($k_p$) du premier système déformable, un coefficient d'amortissement visqueux en torsion ($\lambda_p$) du premier système déformable et une pluralité de premières variables représentant un état instantané (XA) dudit premier système déformable en torsion, dans lequel les premières variables sont choisies dans l'ensemble constitué de la vitesse de rotation de l'arbre moteur, la vitesse de rotation de l'élément secondaire du double volant amortisseur, un couple ($T_e$) transmis par l'arbre moteur, un couple cumulé ($Tc_1 + Tc_2$) transmis par l'élément secondaire du double volant amortisseur aux deux demies boîtes de vitesse, leurs dérivées et intégrales temporelles à tous les ordres, et des combinaisons de ces variables, les premières variables comportant une première variable de convergence choisie dans l'ensemble constitué de la vitesse de rotation de l'arbre moteur, la vitesse de rotation de l'élément secondaire du double volant amortisseur, leurs dérivées et intégrales temporelles à tous les ordres, et les combinaisons de ces variables, le dispositif de calcul étant apte à calculer les premières variables du premier modèle numérique à des instants successifs en faisant converger la première variable de convergence avec la vitesse de rotation mesurée de l'arbre moteur et/ou la vitesse de rotation mesurée de l'élément secondaire du double volant amortisseur et à déterminer le couple cumulé transmis par l'élément secondaire du double volant amortisseur à des instants successifs en fonction des premières variables calculées, ledit couple cumulé correspondant à la somme des couples appliqués par les embrayages sur les arbres d'entrée de la première et de la seconde demi-boîte de vitesse,

et dans lequel un second modèle numérique simule par un second système déformable en torsion l'ensemble constitué de l'arbre de sortie (16) de la boîte de vitesses (5), le différentiel (12) et les arbres des roues motrices, le second modèle numérique comportant un coefficient de raideur de torsion ($k_s$) du second système déformable, un coefficient d'amortissement visqueux en torsion ($\lambda_s$) du second système déformable et une pluralité de secondes variables représentant un état instantané dudit second système déformable en torsion, dans lequel les secondes variables sont choisies dans l'ensemble constitué de la vitesse de rotation de l'arbre de sortie de la boîte de vitesse, la vitesse de rotation des arbres des roues, un couple de sortie de la boîte de vitesses $\left(\frac{Tc_1}{q_1} + \frac{Tc_2}{q_2}\right)$, leurs dérivées et intégrales temporelles à tous les ordres, et les combinaisons de ces variables, les secondes variables comportant une seconde variable de convergence choisie dans l'ensemble constitué de la vitesse de rotation de l'arbre de sortie de la boîte de vitesse, la vitesse de rotation des arbres des roues, leurs dérivées et intégrales temporelles à tous les ordres, et les combinaisons de ces variables, le dispositif de calcul étant apte à calculer les secondes variables du second modèle numérique à des instants successifs en faisant converger la seconde variable de convergence avec la vitesse de rotation mesurée de l'arbre de sortie de la boîte de vitesses et/ou la vitesse de rotation mesurée des arbres des roues et à déterminer le couple de sortie $\left(\frac{\widehat{Tc_1}}{q_1} + \frac{Tc_2}{q_2}\right)$ de la boîte de vitesses à des instants successifs en fonction des secondes variables calculées, ledit couple de sortie de la boîte de vitesses correspondant à la somme des couples d'entrée appliqués sur les arbres d'entrée des premières et secondes demies boîtes de vitesse pondérés par les rapports de transmission respectifs des demies boîtes de vitesse sur l'arbre de sortie de la boîte de vitesses,

un dispositif de calcul étant apte à déterminer le premier couple d'entrée ($Tc_1$) agissant sur l'arbre d'entrée de la première demi-boîte de vitesses et le second couple d'entrée ($Tc_2$) agissant sur l'arbre d'entrée de la seconde demi-boîte de vitesses à des instants successifs en fonction du couple cumulé $\left(\widehat{Tc_1 + Tc_2}\right)$ déterminé avec le premier modèle numérique et du couple de sortie $\left(\widehat{\frac{Tc_1}{q_1} + \frac{Tc_2}{q_2}}\right)$ de la boîte de vitesses déterminé par le second modèle numérique.

**Patentansprüche**

1. Verfahren zum Bestimmen des Drehmoments ($Tc_1$, $Tc_2$), das von jeder Kupplung in einer Kraftübertragungskette eines Kraftfahrzeugs mit Doppelkupplung übertragen wird, wobei eine Kraftübertragungskette verwendet wird, welche umfasst:

   - eine Motorwelle (3), die dazu bestimmt ist, von einem Motor (2) des Kraftfahrzeugs (1) drehend angetrieben zu werden,
   - ein Zweimassen-Dämpfungsschwungrad (15), welches ein primäres Element und ein sekundäres Element umfasst, wobei das primäre Element mit der Motorwelle drehfest verbunden ist und das sekundäre Element mit dem primären Element über ein Dämpfungselement gekoppelt ist,
   - ein Schaltgetriebe (5), das eine erste Getriebehälfte und eine zweite Getriebehälfte, die voneinander unabhängig sind, umfasst, wobei jede Getriebehälfte eine Eingangswelle (4a, 4b), die dazu bestimmt ist, mit dem sekundären Element des Zweimassen-Dämpfungsschwungrades durch eine erste bzw. zweite Kupplung (6) reibungsgekuppelt zu werden, eine Sekundärwelle (7a, 7b) und mehrere Synchronisierzahnräder (10), die geeignet sind, die Eingangswelle und die Sekundärwelle gemäß mehreren Übersetzungsverhältnissen zu koppeln, umfasst, wobei die Sekundärwelle jeder Getriebehälfte mit einer Abtriebswelle (16) des Schaltgetriebes gekoppelt ist und Wellen der Antriebsräder (13) des Kraftfahrzeugs mit der Abtriebswelle des Schaltgetriebes über ein Differential (12) gekoppelt sind,

   wobei das Verfahren umfasst:

   - Messen einer Drehzahl ($W_p$) der Motorwelle,
   - Messen einer Drehzahl ($W_{damp}$) des sekundären Elements des Zweimassen-Dämpfungsschwungrades,
   - Liefern eines computerimplementierten ersten numerischen Modells (27), welches das Zweimassen-Dämpfungsschwungrad durch ein erstes torsionsverformbares System simuliert, wobei das erste numerische Modell einen Torsionssteifigkeitskoeffizienten ($k_p$) des ersten verformbaren Systems, einen Koeffizienten der viskosen Torsionsdämpfung ($\lambda_p$) des ersten verformbaren Systems und mehrere erste Variable, die einen momentanen Zustand (XA) des ersten torsionsverformbaren Systems repräsentieren, umfasst, wobei die ersten Variablen aus der Gruppe ausgewählt sind, die aus der Drehzahl der Motorwelle, der Drehzahl des sekundären Elements des Zweimassen-Dämpfungsschwungrades, einem Drehmoment ($T_e$), das von der Motorwelle übertragen wird, einem kumulierten Drehmoment ($Tc_1 + Tc_2$), das von dem sekundären Element des Zweimassen-Dämpfungsschwungrades auf die zwei Schaltgetriebehälften übertragen wird, ihren Zeitableitungen und Zeitintegralen aller Ordnungen und Kombinationen dieser Variablen besteht, wobei die ersten Variablen eine erste Konvergenzvariable (YA_est) umfassen, die aus der Gruppe ausgewählt ist, die aus der Drehzahl der Motorwelle, der Drehzahl des sekundären Elements des Zweimassen-Dämpfungsschwungrades, ihren Zeitableitungen und Zeitintegralen aller Ordnungen und den Kombinationen dieser Variablen besteht,
   - Berechnen der ersten Variablen (XA_est) des ersten numerischen Modells zu aufeinander folgenden Zeitpunkte, indem die erste Konvergenzvariable (YA_est) mit der gemessenen Drehzahl der Motorwelle und/oder der gemessenen Drehzahl des sekundären Elements des Zweimassen-Dämpfungsschwungrades konvergieren gelassen wird (31), und

   - Bestimmen des kumulierten Drehmoments $\widehat{(Tc_1 + Tc_2)}$, das durch die erste und die zweite Kupplung von dem sekundären Element des Zweimassen-Dämpfungsschwungrades aus übertragen wird, zu aufeinander folgenden Zeitpunkten in Abhängigkeit von den berechneten ersten Variablen (XA_est), wobei das kumulierte Drehmoment der Summe der Drehmomente entspricht, die von der ersten und der zweiten Kupplung auf die Eingangswellen der ersten bzw. zweiten Schaltgetriebehälfte ausgeübt werden,

   wobei das Verfahren außerdem umfasst:

   - Messen einer Drehzahl ($W_s$) der Abtriebswelle des Schaltgetriebes,
   - Messen einer Drehzahl ($W_r$) der Wellen der Räder,
   - Liefern eines computerimplementierten zweiten numerischen Modells (28), welches durch ein zweites torsionsverformbares System die Anordnung simuliert, die aus der Abtriebswelle (16) des Schaltgetriebes (5), dem Differential (12) und den Wellen der Antriebsräder besteht, wobei das zweite numerische Modell einen Torsionssteifigkeitskoeffizienten ($k_s$) des zweiten verformbaren Systems, einen Koeffizienten der viskosen Torsionsdämpfung ($\lambda_s$) des zweiten verformbaren Systems und mehrere zweite Variable, die einen momentanen Zustand (XB) des zweiten torsionsverformbaren Systems repräsentieren, umfasst, wobei die zweiten Variablen aus der Gruppe ausgewählt sind, die aus der Drehzahl der Abtriebswelle des Schaltgetriebes, der Drehzahl der Wellen der Räder, einem Abtriebsdrehmoment des Schaltgetriebes ( $\dfrac{Tc_1}{q_1} + \dfrac{Tc_2}{q_2}$ ) , ihren Zeitableitungen und Zeitintegralen aller Ordnungen und den Kombinationen dieser Variablen besteht, wobei die zweiten Variablen eine zweite Konvergenzvariable (YB_est) umfassen, die aus der Gruppe ausgewählt ist, die aus der Drehzahl der Abtriebswelle des Schaltgetriebes, der Drehzahl der Wellen der Räder, ihren Zeitableitungen und Zeitintegralen aller Ordnungen und den Kombinationen dieser Variablen besteht,
- Berechnen der zweiten Variablen (XB_est) des zweiten numerischen Modells zu aufeinander folgenden Zeitpunkten, indem die zweite Konvergenzvariable (YB est) mit der gemessenen Drehzahl der Abtriebswelle des Schaltgetriebes und/oder der gemessenen Drehzahl der Wellen der Räder konvergieren gelassen wird (33), und

- Bestimmen des Abtriebsdrehmoments $(\widehat{\dfrac{Tc_1}{q_1} + \dfrac{Tc_2}{q_2}})$ des Schaltgetriebes zu aufeinander folgenden Zeitpunkten in Abhängigkeit von den berechneten zweiten Variablen (YB_est), wobei das Abtriebsdrehmoment des Schaltgetriebes der Summe der von der ersten und der zweiten Kupplung auf die Eingangswellen der ersten bzw. zweiten Schaltgetriebehälfte ausgeübten Eingangsdrehmomente entspricht, die mit den jeweiligen Übersetzungsverhältnissen der Schaltgetriebehälften gewichtet sind,

und wobei das Verfahren außerdem umfasst:

- Bestimmen des ersten Eingangsdrehmoments ($Tc_1$), das auf die Eingangswelle der ersten Schaltgetriebehälfte wirkt, und des zweiten Eingangsdrehmoments ($Tc_2$), das auf die Eingangswelle der zweiten Schaltgetriebehälfte wirkt, zu aufeinander folgenden Zeitpunkten in Abhängigkeit von dem kumulierten Drehmoment $(\widehat{Tc_1 + Tc_2})$,

das mit dem ersten numerischen Modell bestimmt wurde, und von dem Abtriebsdrehmoment $(\widehat{\dfrac{Tc_1}{q_1} + \dfrac{Tc_2}{q_2}})$ des

Schaltgetriebes, das durch das zweite numerische Modell bestimmt wurde.

2. Verfahren nach Anspruch 1, wobei das erste und/oder das zweite numerische Modell außerdem einen Koeffizienten der viskosen Reibung des entsprechenden verformbaren Systems umfassen.

3. Verfahren nach einem der Ansprüche 1 bis 2, wobei die ersten Variablen des ersten numerischen Modells zwei Konvergenzvariable (YA_est) umfassen, welche die Drehzahl der Motorwelle und die Drehzahl des sekundären Elements des Zweimassen-Dämpfungsschwungrades sind, wobei der Schritt der Berechnung der ersten Variablen des ersten numerischen Modells zu aufeinander folgenden Zeitpunkten durchgeführt wird, indem die ersten Konvergenzvariablen mit der gemessenen Drehzahl der Motorwelle bzw. der gemessenen Drehzahl des sekundären Elements des Zweimassen-Dämpfungsschwungrades konvergieren gelassen werden.

4. Verfahren nach einem der Ansprüche 1 bis 3, wobei die zweiten Variablen des zweiten numerischen Modells zwei Konvergenzvariable (YB est) umfassen, welche die Drehzahl der Abtriebswelle des Schaltgetriebes und die Drehzahl der Wellen der Räder sind, wobei der Schritt der Berechnung der zweiten Variablen des zweiten numerischen Modells zu aufeinander folgenden Zeitpunkten durchgeführt wird, indem die zweiten Konvergenzvariablen mit der gemessenen Drehzahl der Abtriebswelle des Schaltgetriebes bzw. der gemessenen Drehzahl der Wellen der Räder konvergieren gelassen werden.

5. Verfahren nach einem der Ansprüche 1 bis 4, wobei der Schritt des Bestimmens des ersten und des zweiten Eingangsdrehmoments, die auf die Eingangswelle jeweils einer der Schaltgetriebehälften wirken, durch einen Verarbeitungsblock (34) ausgeführt wird, der einen Vektor, welcher aus der Summe der auf die einzelnen Eingangswellen des Schaltgetriebes ausgeübten Drehmomente $(\widehat{Tc_1 + Tc_2})$ und der Summe dieser jeweils mit dem Übersetzungsverhältnis der jeweiligen Schaltgetriebehälfte gewichteten Drehmomente $(\widehat{\dfrac{Tc_1}{q_1} + \dfrac{Tc_2}{q_2}})$ besteht, mit einer

inversen Matrix multipliziert.

6. Verfahren nach einem der Ansprüche 1 bis 4, wobei das Verfahren außerdem umfasst:

- Messen der Drehzahl ($W_1$) der Eingangswelle der ersten Schaltgetriebehälfte,
- Messen der Drehzahl ($W_2$) der Eingangswelle der zweiten Schaltgetriebehälfte,
- Liefern eines computerimplementierten dritten numerischen Modells, welches das Schaltgetriebe durch ein drittes torsionsverformbares System (43) simuliert, wobei das dritte numerische Modell für jede Schaltgetriebehälfte einen Torsionssteifigkeitskoeffizienten ($k_1$, $k_2$) und einen Koeffizienten der viskosen Torsionsdämpfung ($\lambda_1$, $\lambda_2$) umfasst, wobei das dritte numerische Modell außerdem mehrere dritte Variable umfasst, die einen momentanen Zustand des dritten torsionsverformbaren Systems repräsentieren, wobei die dritten Variablen aus der Gruppe ausgewählt sind, die aus

- der Drehzahl der Eingangswelle der ersten Schaltgetriebehälfte,
- der Drehzahl der Eingangswelle der zweiten Schaltgetriebehälfte,
- der Drehzahl ($W_s$) der Abtriebswelle des Schaltgetriebes,
- dem Eingangsdrehmoment ($Tc_1$), das auf die erste Schaltgetriebehälfte wirkt,
- dem Eingangsdrehmoment ($Tc_2$), das auf die zweite Schaltgetriebehälfte wirkt,
- der Summe $(\widehat{Tc_1 + Tc_2})$ der Eingangsdrehmomente von Kupplungen, die auf die Schaltgetriebehälften wirken,
- dem Abtriebsdrehmoment $(\widehat{\frac{Tc_1}{q_1} + \frac{Tc_2}{q_2}})$ des Schaltgetriebes,
- einem Torsionsverformungswinkel ($\alpha_1$) der ersten Schaltgetriebehälfte zwischen einem Messpunkt der Drehzahl der Eingangswelle der ersten Schaltgetriebehälfte und einem Messpunkt der Drehzahl der Abtriebswelle des Schaltgetriebes,
- einem Torsionsverformungswinkel ($\alpha_2$) der zweiten Schaltgetriebehälfte zwischen einem Messpunkt der Drehzahl der Eingangswelle der zweiten Schaltgetriebehälfte und einem Messpunkt der Drehzahl der Abtriebswelle des Schaltgetriebes,
- den Zeitableitungen und Zeitintegralen aller Ordnungen der oben genannten Variablen und den Kombinationen dieser Variablen

besteht, wobei die dritten Variablen eine dritte Ausgangs-Konvergenzvariable umfassen, die aus der Gruppe ausgewählt ist, die aus

- der Drehzahl der Eingangswelle der ersten Schaltgetriebehälfte,
- der Drehzahl der Eingangswelle der zweiten Schaltgetriebehälfte,
- der Drehzahl der Abtriebswelle des Schaltgetriebes,
- der Summe der Eingangsdrehmomente, die auf die Schaltgetriebehälften wirken,
- dem Abtriebsdrehmoment des Schaltgetriebes,
- ihren Zeitableitungen und Zeitintegralen aller Ordnungen und den Kombinationen dieser Variablen

besteht,
- Berechnen der dritten Variablen des dritten numerischen Modells zu aufeinander folgenden Zeitpunkten, indem die dritte Konvergenzvariable mit der gemessenen Drehzahl der Eingangswelle der ersten Schaltgetriebehälfte, der gemessenen Drehzahl der Eingangswelle der zweiten Schaltgetriebehälfte, der gemessenen Drehzahl der Abtriebswelle des Schaltgetriebes, dem durch das erste numerische Modell bestimmten kumulierten Drehmoment bzw. dem durch das zweite numerische Modell bestimmten Abtriebsdrehmoment des Schaltgetriebes konvergieren gelassen wird, und
- Bestimmen des ersten Eingangsdrehmoments ($Tc_1$), das auf die Eingangswelle der ersten Schaltgetriebehälfte wirkt, und des zweiten Eingangsdrehmoments ($Tc_2$), das auf die Eingangswelle der zweiten Schaltgetriebehälfte wirkt, zu aufeinander folgenden Zeitpunkten in Abhängigkeit von den berechneten Verformungswinkeln der Wellen der Schaltgetriebehälften zwischen den Messpunkten der Drehzahlen der jeweiligen Eingangswellen und dem Messpunkt der Drehzahl der Abtriebswelle des Schaltgetriebes.

7. Verfahren nach Anspruch 6, wobei die dritten Variablen des dritten numerischen Modells dritte Konvergenzvariable umfassen, die der Drehzahl der Eingangswelle der ersten Schaltgetriebehälfte, der Drehzahl der Eingangswelle der zweiten Schaltgetriebehälfte, der Drehzahl der Abtriebswelle des Schaltgetriebes, der Summe der Eingangsdrehmomente der Schaltgetriebehälften bzw. dem Abtriebsdrehmoment des Schaltgetriebes entsprechen, wobei der Schritt der Berechnung der dritten Variablen des dritten numerischen Modells zu aufeinander folgenden Zeitpunkten durchgeführt wird, indem die dritten Konvergenzvariablen mit den entsprechenden gemessenen Drehzahlen und mit den entsprechenden Drehmomenten, die durch das erste und das zweite numerische Modell bestimmt wurden, konvergieren gelassen werden.

8. Verfahren nach einem der Ansprüche 1 bis 7, wobei die Drehzahlen mithilfe physikalischer Sensoren gemessen werden, die eine Winkelauflösung aufweisen, welche feiner als oder gleich 1/400 Umdrehung, vorzugsweise feiner als oder gleich 1/600 Umdrehung ist.

9. Verfahren nach einem der Ansprüche 1 bis 8, wobei der Schritt des Messens der Drehzahl der Wellen der Räder des Fahrzeugs umfasst:

   - Messen der Drehzahl eines ersten Rades,
   - Messen der Drehzahl eines zweiten Rades,

   und wobei die Drehzahl der Wellen der Räder der Mittelwert der gemessenen Drehzahlen der Räder ist.

10. Verfahren nach einem der Ansprüche 1 bis 8, wobei der Schritt des Messens der Drehzahl der Wellen der Räder den Schritt des Messens der Drehzahl eines einzigen Rades umfasst.

11. Verfahren nach einem der Ansprüche 1 bis 10, welches außerdem die Schritte des Messens und Registrierens des Torsionssteifigkeitskoeffizienten und des Koeffizienten der viskosen Torsionsdämpfung der verformbaren Systeme zu Zeitpunkten, zu denen sich die Kraftübertragungskette des Fahrzeugs in einem stabilen Zustand befindet, umfasst.

12. Messsystem zum Bestimmen des Drehmoments, das von jeder Kupplung in einer Kraftübertragungskette eines Kraftfahrzeugs mit Doppelkupplung übertragen wird, geeignet für eine Kraftübertragungskette, welche umfasst:

   - eine Motorwelle (3), die dazu bestimmt ist, von einem Motor (2) des Kraftfahrzeugs (1) drehend angetrieben zu werden,
   - ein Zweimassen-Dämpfungsschwungrad (15), welches ein primäres Element und ein sekundäres Element umfasst, wobei das primäre Element mit der Motorwelle drehfest verbunden ist und das sekundäre Element mit dem primären Element über ein Dämpfungselement gekoppelt ist,
   - ein Schaltgetriebe (5), das eine erste Getriebehälfte und eine zweite Getriebehälfte, die voneinander unabhängig sind, umfasst, wobei jede Getriebehälfte eine Eingangswelle (4a, 4b), die dazu bestimmt ist, mit dem sekundären Element des Zweimassen-Dämpfungsschwungrades durch eine erste bzw. zweite Kupplung (6) reibungsgekuppelt zu werden, eine Sekundärwelle (7a, 7b) und mehrere Synchronisierzahnräder (10), die geeignet sind, die Eingangswelle und die Sekundärwelle gemäß mehreren Übersetzungsverhältnissen zu koppeln, umfasst, wobei die Sekundärwelle jeder Getriebehälfte mit einer Abtriebswelle (16) des Schaltgetriebes gekoppelt ist und Wellen der Antriebsräder (12) des Kraftfahrzeugs mit der Abtriebswelle des Schaltgetriebes über ein Differential (12) gekoppelt sind,
   - einen ersten physikalischen Sensor (21), der geeignet ist, eine Drehzahl ($W_p$) der Motorwelle zu messen,
   - einen zweiten physikalischen Sensor (22), der geeignet ist, eine Drehzahl ($W_{damp}$) des sekundären Elements des Zweimassen-Dämpfungsschwungrades zu messen,
   - einen dritten physikalischen Sensor (23), der geeignet ist, eine Drehzahl ($W_s$) der Abtriebswelle (16) des Schaltgetriebes zu messen,
   - einen vierten physikalischen Sensor (24), der geeignet ist, eine Drehzahl ($W_r$) der Räder zu messen,
   - eine computerimplementierte Berechnungsvorrichtung, die ein erstes und ein zweites numerisches Modell (29, 30) liefert,

   wobei ein erstes numerisches Modell das Dämpfungsschwungrad durch ein erstes torsionsverformbares System simuliert, wobei das erste numerische Modell einen Torsionssteifigkeitskoeffizienten ($k_p$) des ersten verformbaren Systems, einen Koeffizienten der viskosen Torsionsdämpfung ($\lambda_p$) des ersten verformbaren Systems und mehrere erste Variable, die einen momentanen Zustand (XA) des ersten torsionsverformbaren Systems repräsentieren, umfasst, wobei die ersten Variablen aus der Gruppe ausgewählt sind, die aus der Drehzahl der Motorwelle, der Drehzahl des sekundären Elements des Zweimassen-Dämpfungsschwungrades, einem Drehmoment ($T_e$), das von der Motorwelle übertragen wird, einem kumulierten Drehmoment ($Tc_1+Tc_2$), das von dem sekundären Element des Zweimassen-Dämpfungsschwungrades auf die zwei Schaltgetriebehälften übertragen wird, ihren Zeitableitungen und Zeitintegralen aller Ordnungen und Kombinationen dieser Variablen besteht, wobei die ersten Variablen eine erste Konvergenzvariable umfassen, die aus der Gruppe ausgewählt ist, die aus der Drehzahl der Motorwelle, der Drehzahl des sekundären Elements des Zweimassen-Dämpfungsschwungrades, ihren Zeitableitungen und Zeitintegralen aller Ordnungen und den Kombinationen dieser Variablen besteht, wobei die Berechnungsvorrichtung geeignet ist, die ersten Variablen des ersten numerischen Modells zu aufeinander folgenden Zeitpunkten zu berechnen, indem sie die erste Konbvergenzvariable mit der gemessenen Drehzahl der Motorwelle und/oder der gemessenen Drehzahl des sekundären Elements des Zweimassen-Dämpfungsschwungrades konvergieren lässt, und das kumulierte Drehmoment, das von dem sekundären Element des Zweimassen-Dämpfungsschwungrades übertragen wird, zu aufeinander folgenden Zeitpunkten in Abhängigkeit von den berechneten ersten Variablen zu bestimmen, wobei das kumulierte Drehmoment der Summe der Drehmomente entspricht, die von Kupplungen auf die Eingangswellen der ersten und der zweiten Schaltgetriebehälfte ausgeübt werden,

und wobei ein zweites numerisches Modell durch ein zweites torsionsverformbares System die Anordnung simuliert, die aus der Abtriebswelle (16) des Schaltgetriebes (5), dem Differential (12) und den Wellen der Antriebsräder besteht, wobei das zweite numerische Modell einen Torsionssteifigkeitskoeffizienten ($k_s$) des zweiten verformbaren Systems, einen Koeffizienten der viskosen Torsionsdämpfung ($\lambda_s$) des zweiten verformbaren Systems und mehrere zweite Variable, die einen momentanen Zustand des zweiten torsionsverformbaren Systems repräsentieren, umfasst, wobei die zweiten Variablen aus der Gruppe ausgewählt sind, die aus der Drehzahl der Abtriebswelle des Schaltgetriebes, der Drehzahl der Wellen der Räder, einem Abtriebsdrehmoment des Schaltgetriebes

$( \dfrac{Tc_1}{q_1} + \dfrac{Tc_2}{q_2} )$ , ihren Zeitableitungen und Zeitintegralen aller Ordnungen und den Kombinationen dieser Variablen besteht, wobei die zweiten Variablen eine zweite Konvergenzvariable umfassen, die aus der Gruppe ausgewählt ist, die aus der Drehzahl der Abtriebswelle des Schaltgetriebes, der Drehzahl der Wellen der Räder, ihren Zeitableitungen und Zeitintegralen aller Ordnungen und den Kombinationen dieser Variablen besteht, wobei die Berechnungsvorrichtung geeignet ist, die zweiten Variablen des zweiten numerischen Modells zu aufeinander folgenden Zeitpunkten zu berechnen, indem sie die zweite Konbvergenzvariable mit der gemessenen Drehzahl der Abtriebswelle des Schaltgetriebes und/oder der gemessenen Drehzahl der Wellen der Räder konvergieren lässt, und das

Abtriebsdrehmoment $( \widehat{\frac{Tc_1}{q_1} + \frac{Tc_2}{q_2}} )$ des Schaltgetriebes zu aufeinander folgenden Zeitpunkten in Abhängigkeit von den berechneten zweiten Variablen zu bestimmen, wobei das Abtriebsdrehmoment des Schaltgetriebes der Summe der auf die Eingangswellen der ersten und zweiten Schaltgetriebehälfte ausgeübten Eingangsdrehmomente entspricht, die mit den jeweiligen Übersetzungsverhältnissen der Schaltgetriebehälften auf die Abtriebswelle des Schaltgetriebes gewichtet sind,

wobei eine Berechnungsvorrichtung in der Lage ist, das erste Eingangsdrehmoment ($Tc_1$), das auf die Eingangswelle der ersten Schaltgetriebehälfte wirkt, und das zweite Eingangsdrehmoment ($Tc_2$), das auf die Eingangswelle der zweiten Schaltgetriebehälfte wirkt, zu aufeinander folgenden Zeitpunkten in Abhängigkeit von dem kumulierten Drehmoment $( \widehat{Tc_1 + Tc_2} )$, das mit dem ersten numerischen Modell bestimmt wurde, und von dem Abtriebsdrehmoment $( \widehat{\frac{Tc_1}{q_1} + \frac{Tc_2}{q_2}} )$ des Schaltgetriebes, das durch das zweite numerische Modell bestimmt wurde, zu bestimmen.

## Claims

1. Method for determining the torque ($Tc_1$, $Tc_2$) transmitted by each clutch in a transmission chain of a motor vehicle with a dual clutch, incorporating a transmission chain that includes:

   - a drive shaft (3) that is designed to be driven in rotation by an engine (2) of the motor vehicle (1),
   - a dual mass flywheel (15) including a primary element and a secondary element, the primary element being constrained to rotate with the drive shaft and the secondary element being coupled to the primary element via a damping element,
   - a gearbox (5) including a first half gearbox and a second half gearbox that are separate from one another, each half gearbox having an input shaft (4a, 4b) that is designed to be coupled by friction to the secondary element of the dual mass flywheel by a first or second clutch (6) respectively, a secondary shaft (7a, 7b) and a plurality of synchromesh gears (10) that are designed to couple the input shaft and the secondary shaft in a plurality of transmission ratios, the secondary shaft of each half gearbox being coupled to an output shaft (16) of the gearbox and the shafts of the drive wheels (13) of the motor vehicle being coupled to the output shaft of the gearbox via a differential (12),

the method including:

- measuring the rotational speed of the drive shaft ($W_p$),
- measuring the rotational speed ($W_{damp}$) of the secondary element of the dual mass flywheel,
- providing a first computer-implemented digital model (27) that simulates the dual mass flywheel using a first torsionally deformable system, the first digital model including a torsional stiffness coefficient ($k_p$) of the first deformable system, a torsional viscous-damping coefficient ($\lambda_p$) of the first deformable system and a plurality of first variables representing an instantaneous state (XA) of said first torsionally deformable system, in which the first variables are chosen from the set comprising the rotational speed of the drive shaft, the rotational speed of the secondary element of the dual mass flywheel, a torque ($T_e$) transmitted by the drive shaft, a cumulative torque ($Tc_1+Tc_2$) transmitted by the secondary element of the dual mass flywheel to the two half gearboxes, the derivatives and integrals in time of all orders thereof, and the combinations of these variables, the first variables including a first convergence variable (YA_est) chosen from the set comprising the rotational speed of the drive shaft, the rotational speed of the secondary element of the dual mass flywheel, the derivatives and integrals in time of all orders thereof, and the combinations of these variables,
- calculating the first variables (XA_est) of the first digital model at successive instants by converging (31) the first convergence variable (YA_est) with the measured rotational speed of the drive shaft and/or the measured rotational speed of the secondary element of the dual mass flywheel, and

- determining the cumulative torque $(\widehat{Tc_1 + Tc_2})$ transmitted by the first and second clutches from the secondary element of the dual mass flywheel at successive instants as a function of the first calculated variables (XA_est), said cumulative torque being the sum of the torques applied by the first and second clutches to the input shafts of the first and second half gearboxes respectively,

the method also including:

- measuring a rotational speed ($W_s$) of the output shaft of the gearbox,
- measuring a rotational speed ($W_r$) of the axle shafts,
- providing a second computer-implemented digital model (28) that uses a second torsionally deformable system to simulate the assembly comprising the output shaft (16) of the gearbox (5), the differential (12) and the shafts of the drive wheels, the second digital model including a torsional stiffness coefficient ($k_s$) of the second deformable system, a torsional viscous-damping coefficient ($\lambda_s$) of the second deformable system and a plurality of second variables representing an instantaneous state (XB) of said second torsionally deformable system, in which the second variables are chosen from the set comprising the rotational speed of the output shaft of the gearbox, the rotational speed of the axle shafts, an output torque of the gearbox $(\frac{Tc_1}{q_1} + \frac{Tc_2}{q_2})$, the derivatives and integrals in time of all orders thereof, and the combinations of these variables, the second variables including a second convergence variable (YB_est) chosen from the set comprising the rotational speed of the output shaft of the gearbox, the rotational speed of the axle shafts, the derivatives and integrals in time of all orders thereof, and the combinations of these variables,
- calculating the second variables (XB_est) of the second digital model at successive instants by converging (33) the second convergence variable (YB_est) with the measured rotational speed of the output shaft of the gearbox and/or the measured rotational speed of the axle shafts, and

- determining the output torque $(\frac{\widehat{Tc_1}}{q_1} + \frac{Tc_2}{q_2})$ of the gearbox at successive instants as a function of the second calculated variables (YB_est), said output torque of the gearbox being the sum of the input torques applied by the first clutch and the second clutch to the input shafts respectively of the first and second half gearboxes weighted by the respective transmission ratios of the half gearboxes.

and the method also including:

- determining the first input torque ($Tc_1$) acting on the input shaft of the first half gearbox and the second input torque ($Tc_2$) acting on the input shaft of the second half gearbox at successive instant as a function of the

cumulative torque $(\widehat{Tc_1 + Tc_2})$ determined using the first digital model and of the output torque $(\widehat{\frac{Tc_1}{q_1} + \frac{Tc_2}{q_2}})$ of the gearbox determined by the second digital model.

2. Method according to Claim 1, in which at least one of the first and second digital models also includes a coefficient of viscous friction of the corresponding deformable system.

3. Method according to one of Claims 1 to 2, in which the first variables of the first digital model include two convergence variables (YA_est) that are respectively the rotational speed of the drive shaft and the rotational speed of the secondary element of the dual mass flywheel, the calculation step for the first variables of the first digital model at successive instants being carried out by converging the first convergence variables with respectively the measured rotational speed of the drive shaft and the measured rotational speed of the secondary element of the dual mass flywheel.

4. Method according to one of Claims 1 to 3, in which the second variables of the second digital model include two convergence variables (YB_est) that are respectively the rotational speed of the output shaft of the gearbox and the rotational speed of the axle shaft, the calculation step for the second variables of the second digital model at successive instants being carried out by converging the second convergence variables with respectively the measured rotational speed of the output shaft of the gearbox and the measured rotational speed of the axle shaft.

5. Method according to one of Claims 1 to 4, in which the determination step for the first input torque and the second input torque acting respectively on each input shaft of the half gearboxes is carried out by a processing unit (34) by multiplying an inverse matrix by a vector comprising the sum of the torques applied to each input shaft of the gearbox $(\widehat{Tc_1 + Tc_2})$ and the sum of these torques, each weighted by the ratio of the respective half gearboxes $\widehat{\frac{Tc_1}{q_1} + \frac{Tc_2}{q_2}}$.

6. Method according to one of Claims 1 to 4, the method also including:

- measuring the rotational speed $(W_1)$ of the input shaft of the first half gearbox,
- measuring the rotational speed $(W_2)$ of the input shaft of the second half gearbox,
- providing a third computer-implemented digital model that simulates the gearbox using a third torsionally deformable system (43), the third digital model having a torsional stiffness coefficient $(k_1, k_2)$ and a torsional viscous-damping coefficient $(\lambda_1, \lambda_2)$ for each half gearbox, the third digital model also having a plurality of third variables representing an instantaneous state of said third torsionally deformable system, in which the third variables are chosen from the set comprising:

   ◦ the rotational speed of the input shaft of the first half gearbox,
   ◦ the rotational speed of the input shaft of the second half gearbox,
   ◦ the rotational speed $(W_s)$ of the output shaft of the gearbox,
   ◦ the input torque $(Tc_1)$ acting on the first half gearbox,
   ◦ the input torque $(Tc_2)$ acting on the second half gearbox,
   ◦ the sum $(\widehat{Tc_1 + Tc_2})$ of the clutch input torques acting on the half gearboxes,

   ◦ the output torque $(\widehat{\frac{Tc_1}{q_1} + \frac{Tc_2}{q_2}})$ of the gearbox,

   ◦ an angle of torsional deformation $(\alpha_1)$ of the first half gearbox between a measurement point of the rotational speed of the input shaft of the first half gearbox and a measurement point of the rotational speed of the output shaft of the gearbox,
   ◦ an angle of torsional deformation $(\alpha_2)$ of the second half gearbox between a measurement point of the rotational speed of the input shaft of the second half gearbox and the measurement point of the rotational speed of the output shaft of the gearbox,
   ◦ the derivatives and integrals in time of all orders of the aforementioned variables and the combinations of these variables

the third variables including a third output convergence variable chosen from the set comprising:

   ∘ the rotational speed of the input shaft of the first half gearbox,
   ∘ the rotational speed of the input shaft of the second half gearbox,
   ∘ the rotational speed of the output shaft of the gearbox,
   ∘ the sum of the input torques acting on the half gearboxes,
   ∘ the output torque of the gearbox,
   ∘ the derivatives and integrals in time of all orders thereof and the combinations of these variables,

- calculating the third variables of the third digital model at successive instants by converging the third convergence variable with, respectively, the measured rotational speed of the input shaft of the first half gearbox, the measured rotational speed of the input shaft of the second half gearbox, the measured rotational speed of the output shaft of the gearbox, the cumulative torque determined by the first digital model and the output torque of the gearbox determined by the second digital model, and
- determining the first input torque ($Tc_1$) acting on the input shaft of the first half gearbox and the second input torque ($Tc_2$) acting on the input shaft of the second half gearbox at successive instants as a function of the angles of deformation of the shafts of the half gearboxes between the measurement points of the rotational speeds of the respective input shafts and the measurement point of the rotational speed of the output shaft of the gearbox calculated.

7. Method according to Claim 6, the third variables of the third digital model including the third convergence variables corresponding respectively to the rotational speed of the input shaft of the first half gearbox, the rotational speed of the input shaft of the second half gearbox, the rotational speed of the output shaft of the gearbox, the sum of the input torques of the half gearboxes, the output torque of the gearbox, the calculation step for the third variables of the third digital model at successive instants being carried out by converging the third convergence variables with the corresponding measured speeds and with the corresponding torques determined by the first and second digital models.

8. Method according to one of Claims 1 to 7, in which the rotational speeds are measured using physical sensors with an angular resolution equal to or less than 1/400th of one revolution, preferably equal to or less than 1/600th of one revolution.

9. Method according to one of Claims 1 to 8, in which the measurement step for the rotational speed of the axle shafts of the vehicle includes:

  - measuring the rotational speed of a first wheel,
  - measuring the rotational speed of a second wheel,

and in which the rotational speed of the axle shafts is the average of the measured wheel speeds.

10. Method according to one of Claims 1 to 8, in which the measurement step for the rotational speed of the axle shafts includes the measurement step for the rotational speed for a single wheel.

11. Method according to one of Claims 1 to 10, also including the measurement and recording steps, at the instants at which the transmission chain of the vehicle is in a steady state, the torsional stiffness coefficient and the torsional viscous-damping coefficient of the deformable systems.

12. Measurement system for determining the torque transmitted by each clutch in a transmission chain of a motor vehicle with a dual clutch for a transmission chain that includes:

  - a drive shaft (3) that is designed to be driven in rotation by an engine (2) of the motor vehicle (1),
  - a dual mass flywheel (15) including a primary element and a secondary element, the primary element being constrained to rotate with the drive shaft and the secondary element being coupled to the primary element via a damping element,
  - a gearbox (5) including a first half gearbox and a second half gearbox that are separate from one another, each half gearbox having an input shaft (4a, 4b) that is designed to be coupled by friction to the secondary element of the dual mass flywheel by a first or second clutch (6) respectively, a secondary shaft (7a, 7b) and a plurality of synchromesh gears (10) that are designed to couple the input shaft and the secondary shaft in a plurality of transmission ratios, the secondary shaft of each half gearbox being coupled to an output shaft (16) of the gearbox and the shafts of the drive wheels (12) of the motor vehicle being coupled to the output shaft of the gearbox via a differential (12),
- a first physical sensor (21) that is designed to measure a rotational speed ($W_p$) of the drive shaft,
- a second physical sensor (22) that is designed to measure the rotational speed ($W_{damp}$) of the secondary element of the dual mass flywheel,
- a third physical sensor (23) that is designed to measure a rotational speed ($W_s$) of an output shaft (16) of the gearbox,
- a fourth physical sensor (24) that is designed to measure a rotational speed ($W_r$) of the wheels,
- a computer-implemented processing device providing first and second digital models (29, 30),

in which a first digital model simulates the damping flywheel using a first torsionally deformable system, the first digital model including a torsional stiffness coefficient ($k_p$) of the first deformable system, a torsional viscous-damping coefficient ($\lambda_p$) of the first deformable system and a plurality of first variables representing an instantaneous state (XA) of said first torsionally deformable system, in which the first variables are chosen from the set comprising the rotational speed of the drive shaft, the rotational speed of the secondary element of the dual mass flywheel, a torque ($T_e$) transmitted by the drive shaft, a cumulative torque ($Tc_1+Tc_2$) transmitted by the secondary element of the dual mass flywheel to the two half gearboxes, the derivatives and integrals in time of all orders thereof, and the combinations of these variables, the first variables including a first convergence variable chosen from the set comprising the rotational speed of the drive shaft, the rotational speed of the secondary element of the dual mass flywheel, the derivatives and integrals in time of all orders thereof, and the combinations of these variables, the processing device being designed to calculate the first variables of the first digital model at successive instants by converging the first convergence variable with the measured rotational speed of the drive shaft and/or the measured rotational speed of the secondary element of the dual mass flywheel and to determine the cumulative torque transmitted by the secondary element of the dual mass flywheel at successive instants as a function of the first calculated variables, said cumulative torque being the sum of the torques applied by the clutches to the input shafts of the first and second half gearboxes,

and in which a second digital model uses a second torsionally deformable system to simulate the assembly comprising the output shaft (16) of the gearbox (5), the differential (12) and the drive axle shafts, the second digital model including a torsional stiffness coefficient ($k_s$) of the second deformable system, a torsional viscous-damping coefficient ($\lambda_s$) of the second deformable system and a plurality of second variables representing an instantaneous state of said second torsionally deformable system, in which the second variables are chosen from the set comprising the rotational speed of the output shaft of the gearbox, the rotational speed of the axle shafts, an output torque of

the gearbox $(\frac{Tc_1}{q_1} + \frac{Tc_2}{q_2})$, the derivatives and integrals in time of all orders thereof, and the combinations of these variables, the second variables including a second convergence variable chosen from the set comprising the rotational speed of the output shaft of the gearbox, the rotational speed of the axle shafts, the derivatives and integrals in time of all orders thereof, and the combinations of these variables, the processing device being designed to calculate the second variables of the second digital model at successive instants by converging the second convergence variable with the measured rotational speed of the output shaft of the gearbox and/or the measured rotational speed of the axle shafts, and to determine the output torque $(\frac{\widehat{Tc_1}}{q_1} + \frac{\widehat{Tc_2}}{q_2})$ of the gearbox at successive instants as a function of the second calculated variables, said output torque of the gearbox being the sum of the input torques applied to the input shafts of the first and second half gearboxes weighted by the respective transmission ratios of the half gearboxes on the output shaft of the gearbox,

a processing device that is designed to determine the first input torque ($Tc_1$) acting on the input shaft of the first half gearbox and the second input torque ($Tc_2$) acting on the input shaft of the second half gearbox at successive instant as a function of the cumulative torque $(\widehat{Tc_1 + Tc_2})$ determined using the first digital model and of the output

torque $(\frac{\widehat{Tc_1}}{q_1} + \frac{\widehat{Tc_2}}{q_2})$ of the gearbox determined by the second digital model.

FIG. 1

EP 3 158 213 B1

FIG. 2

FIG. 3

$j_p$

35

38

$\lambda_p$

37

$k_p$

$f_p$

## FIG. 4

40

$j_s$

39

42

$\lambda_s$

41

$k_s$

$f_s$

$q_{pont}$

## FIG. 5

$(\widehat{Tc_1 + Tc_2})$

$\dfrac{\widehat{Tc_1}}{q_1} + \dfrac{\widehat{Tc_2}}{q_2}$

$$\begin{Bmatrix} Tc_1 \\ Tc_2 \end{Bmatrix} = \begin{bmatrix} 1 & 1 \\ \dfrac{1}{q_1} & \dfrac{1}{q_2} \end{bmatrix}^{-1} \begin{Bmatrix} (\widehat{Tc_1 + Tc_2}) \\ \left( \dfrac{\widehat{Tc_1}}{q_1} + \dfrac{\widehat{Tc_2}}{q_2} \right) \end{Bmatrix}$$

$Tc_1$

$Tc_2$

## FIG. 6

FIG. 7

FIG. 8

FIG. 9

**RÉFÉRENCES CITÉES DANS LA DESCRIPTION**

**Documents brevets cités dans la description**

- WO 2014037649 A
- WO 2010007321 A
- FR 2863327 A